# FASCICULE DE BREVET EUROPEEN

(11) **EP 4 337 980 B1**
(45) Date de publication et mention de la délivrance du brevet: **04.06.2025**
(21) Numéro de dépôt: 22735528.6
(22) Date de dépôt: 26.04.2022
(51) Int. Cl.: G01S 7/484, G01S 7/486, G01S 7/481, G01S 17/26

(54) **SYSTEME LIDAR A COMPRESSION D'IMPULSION**
PULSKOMPRESSIONS-LIDARSYSTEM
PULSE-COMPRESSION LIDAR SYSTEM

(30) Priorité: 11.05.2021 FR 2104964
(43) Date de publication de la demande: 20.03.2024
(73) Titulaire: Office National d'Etudes et de Recherches Aérospatiales, 91120 Palaiseau (FR); CENTRE NATIONAL D'ÉTUDES SPATIALES (C N E S), 75001 Paris (FR)
(72) Inventeur: LEMAITRE, François, 91120 PALAISEAU (FR); CEZARD, Nicolas, 91120 PALAISEAU (FR); HEBERT, Philippe-Jean, 75001 PARIS (FR)
(74) Mandataire: IPAZ
(86) Numéro de dépôt international: PCT/FR2022/050783
(87) Numéro de publication internationale: WO 2022/238634

(56) Documents cités:
- US-A1- 2016 377 721
- US-A1- 2019 383 940
- US-A1- 2020 049 799
- US-A1- 2020 049 799
- US-A1- 2021 055 392
- US-B1- 7 342 651
- ZHENG ZHENG ET AL: "Phase noise reduction by using dual-frequency laser in coherent detection", OPTICS AND LASER TECHNOLOGY, ELSEVIER SCIENCE PUBLISHERS BV., AMSTERDAM, NL, vol. 80, 19 January 2016 (2016-01-19), pages 169 - 175, XP029416772, ISSN: 0030-3992, DOI: 10.1016/J.OPTLASTEC.2016.01.005

## Description

### Domaine technique

La présente description concerne un système LIDAR à compression d'impulsion.

### Technique antérieure

Les systèmes LIDAR, pour «Llght Detection And Ranging» en anglais, sont très utilisés pour mesurer des distances. Une séquence de mesure consiste à émettre un faisceau de rayonnement en direction d'une cible, et à collecter une partie de ce rayonnement qui a été rétroréfléchie ou rétrodiffusée par la cible, puis d'en déduire une évaluation de la distance d'éloignement à laquelle se trouve la cible par rapport au système LIDAR. Cette évaluation est réalisée en déterminant la durée qui sépare l'émission du rayonnement par le système LIDAR et la détection de la partie de ce rayonnement qui a été rétroréfléchie ou rétrodiffusée par la cible. Dans la pratique, le faisceau de rayonnement est émis sous forme d'une série d'impulsions successives, et les signaux de détection des parties de rayonnement rétroréfléchies ou rétrodiffusées par la cible qui correspondent une-à-une à toutes les impulsions de la série sont cumulés. Il est possible de cette façon de mesurer la distance d'éloignement d'une cible même lorsque l'intensité du rayonnement qui est rétroréfléchi ou rétrodiffusé par celle-ci est faible. Un compromis est alors réalisé entre d'une part une valeur qui soit suffisante pour un rapport signal-sur-bruit des signaux de détection cumulés, et d'autre part la quantité d'énergie qui est utilisée pour effectuer une mesure. Par ailleurs, la résolution spatiale le long de la direction d'émission des impulsions constitue un enjeu important des systèmes LIDAR à rétrodiffusion atmosphérique. Cette résolution correspond à une tranche identifiée d'atmosphère dont l'épaisseur est connue. Cette résolution, c'est-à-dire l'épaisseur de chaque tranche d'atmosphère à laquelle se rapporte une valeur mesurée d'absorption, est d'autant plus fine que chaque impulsion est courte. Mais alors, pour une énergie d'impulsion déterminée, telle que rendue nécessaire par les conditions opératoires et la qualité de mesure qui est désirée, la valeur de puissance-crête de chaque impulsion est d'autant plus élevée que chaque impulsion est courte, autrement dit que la résolution spatiale qui est voulue est fine.

Par ailleurs, la réalisation d'un système LIDAR en utilisant une technologie de connexion par fibres optiques présente des avantages considérables, notamment une robustesse du système qui est accrue et la suppression de mécanismes d'alignement des composants optiques du système les uns par rapport aux autres. Mais le phénomène connu de diffusion Brillouin stimulée, ou SBS pour «Stimulated Brillouin Scattering», qui se produit dans les fibres optiques limite la valeur de puissance-crête que peut avoir chaque impulsion émise. A cause de cette limitation de puissance-crête, et lorsque le pouvoir de rétro-réflexion ou rétrodiffusion de la cible est très faible, il est nécessaire d'augmenter le nombre des impulsions qui sont émises pour chaque mesure pour que le signal de détection possède une valeur suffisante du rapport signal-sur-bruit. Mais la durée d'une mesure est augmentée en conséquence, et la résolution axiale dégradée.

Le document US 2020/049799 A1 décrit une architecture de système LIDAR de type multi-hétérodyne, dans laquelle N modulateurs de phase sont utilisés en parallèle pour produire N battements de détection hétérodyne qui ont des fréquences différentes.

Le document US 2021/055392 A1 décrit un système LIDAR qui met en œuvre une corrélation entre un faisceau de mesure qui est rétrodiffusé par une cible, et un faisceau de référence qui n'est pas rétrodiffusé par la cible. Autrement dit, le système LIDAR de ce document n'utilise pas de double faisceau de sondage pour appliquer la corrélation de signaux.

Les documents US 7,342,651 B1 et US 2019/383940 A1 décrivent d'autres systèmes LIDAR qui mettent en œuvre des impulsions en doublets ou en peignes.

Enfin, le document US 2016/377721 A1 décrit un système LIDAR à deux sources laser distinctes.

### Problème technique

A partir de cette situation, un but de la présente invention est de proposer un nouveau système LIDAR qui pallie au moins en partie ces inconvénients.

Ainsi, un des buts de l'invention est de permettre de mesurer la distance d'éloignement d'une cible avec un compromis qui est amélioré entre la valeur du rapport signal-sur-bruit et la puissance-crête qui est consommée pour chaque mesure, même lorsque la cible possède un pouvoir de rétro-réflexion ou rétrodiffusion qui est faible ou très faible.

Un but annexe de l'invention est de proposer un tel système LIDAR dont la voie d'émission puisse être réalisée à base de fibres optiques.

Enfin, un but général de l'invention est de fournir des mesures de distance qui soient plus précises qu'avec les systèmes LIDAR de l'art antérieur, à durée égale de chaque cycle de mesure et à pouvoir égal de rétro-réflexion ou rétrodiffusion de la cible, et notamment lorsque la cible est constituée par des particules en suspension dans l'atmosphère.

### Résumé de l'invention

Pour atteindre l'un au moins de ces buts ou un autre, un premier aspect de l'invention propose un système LIDAR qui comprend une voie d'émission et une voie de détection, la voie d'émission comprenant une source laser et étant adaptée pour émettre des impulsions de rayonnement en direction d'une cible qui est externe au système LIDAR. Pour l'invention, la voie d'émission comprend deux chemins de transfert qui sont disposés en parallèle et agencés pour recevoir simultanément à des entrées respectives de ces chemins de transfert, des parties respectives d'un rayonnement de la source laser. De plus, les deux chemins de transfert sont agencés en sortie pour superposer des composantes de chaque impulsion qui sont délivrées par ces deux chemins de transfert. L'un au moins des deux chemins de transfert comprend :
- un modulateur, dit modulateur de compression d'impulsion, qui peut être de type modulateur acousto-optique ; et
- un contrôleur de compression d'impulsion, qui est connecté pour contrôler le modulateur de compression d'impulsion de façon à moduler la composante d'impulsion qui est délivrée par ce chemin de transfert.
De cette façon, lors d'un fonctionnement du système LIDAR, au moins deux composantes de chaque impulsion
sont produites simultanément à partir du rayonnement qui provient de la source laser,
sont superposées au sein de l'impulsion pendant une durée de cette impulsion,
ont des spectres respectifs qui sont différents, et
l'une au moins des deux composantes de l'impulsion est modulée en phase ou en fréquence.

De façon connue, un rayonnement quelconque, notamment un rayonnement d'impulsion, possède des variations temporelles de champ qui sont périodiques, et une modulation en fréquence ou en phase de ce rayonnement consiste à appliquer des variations à sa fréquence, ou à appliquer des variations à sa phase qui sont supplémentaires par rapport à celles qui correspondent aux variations périodiques du champ.

La voie de détection du système LIDAR de l'invention comprend au moins un photodétecteur et est agencée pour remplir des fonctions de :
- voie de mesure, dédiée à détecter des rayonnements qui correspondent un-à-un aux impulsions émises par la voie d'émission après que ces impulsions ont été rétroréfléchies ou rétrodiffusées par la cible, en délivrant des signaux de détection de mesure ; et
- voie de référence, dédiée à détecter des rayonnements qui sont représentatifs des impulsions telles qu'émises par la voie d'émission, en délivrant des signaux de détection de référence.

Ainsi, chacune de la voie de mesure et de la voie de référence détecte des battements qui sont utilisés pour déterminer la distance d'éloignement de la cible par rapport au système LIDAR. En l'absence de détection hétérodyne, ces battements résultent de l'interférence entre les composantes d'impulsions qui proviennent de l'un des deux chemins de transfert avec celles qui proviennent de l'autre chemin de transfert, toutes ces composantes d'impulsions étant détectées par la voie de mesure après avoir été rétroréfléchies ou rétrodiffusées par la cible, et telles qu'émises par le système LIDAR pour la voie de référence. Lorsqu'une détection hétérodyne est utilisée, ces battements tels que causés par l'association des deux voies de transfert sont remplacés par des battements qui résultent d'interférences supplémentaires avec un faisceau de référence, pour les composantes d'impulsions reçues après leur rétro-réflexion ou rétrodiffusion sur la cible pour la voie de mesure, et pour les composantes d'impulsions telles qu'émises par le système LIDAR pour la voie de référence.

La voie de détection comprend en outre un module de traitement numérique qui est agencé pour recevoir les signaux de détection de mesure et les signaux de détection de référence, et qui est configuré pour calculer une fonction de corrélation entre ceux-ci. De cette façon, la ou les composante(s) de chaque impulsion qui est (sont) modulée(s), combinée(s) avec la fonction de corrélation qui est calculée, réalise(nt) un effet de compression d'impulsion.

Grâce à cet effet de compression d'impulsion, la valeur du rapport signal-sur-bruit qui affecte le résultat de la fonction de corrélation est améliorée à puissance moyenne égale qui est consommée pour effectuer une mesure, par rapport à un résultat d'accumulation de signaux de détection qui sont obtenus sans effet de compression d'impulsion. Cette amélioration qui est procurée par l'effet de compression d'impulsion est rendue possible par une intégration cohérente, par opposition à des signaux de détection qui sont accumulés de façon incohérente pour des impulsions successives. La précision et la résolution de chaque mesure de distance sont ainsi améliorées. Présenté autrement, à valeur égale de rapport signal-sur-bruit, le système LIDAR de l'invention permet de réduire le temps qui est nécessaire pour effectuer chaque mesure. Ainsi, la durée de mesure peut être réduite, et/ou la valeur de puissance-crête de chaque impulsion qui est émise peut être réduite. Grâce à cette dernière possibilité, le système LIDAR de l'invention peut être utilisé avec des cibles qui ont des pouvoirs de rétro-réflexion ou rétrodiffusion qui sont faibles ou très faibles, et ce même si la voie d'émission du système LIDAR est réalisée en utilisant une technologie de fibres optiques.

Le gain en termes d'augmentation du rapport signal-sur-bruit, ou en termes de résolution spatiale pour la mesure de distance, est d'un facteur qui est sensiblement égal au produit de la largeur spectrale de chaque composante d'impulsion qui est modulée pour produire l'effet de compression d'impulsion par la durée de cette impulsion. Ce produit peut être supérieur à 500, de préférence supérieur à 5000.

Du fait de sa voie d'émission à deux chemins de transfert qui sont disposés en parallèle, le système LIDAR de l'invention est dit à double faisceau de sondage, ou DFS.

Au sein de cette voie d'émission, un seul des chemins de transfert peut être pourvu d'un modulateur de compression d'impulsion avec contrôleur de compression d'impulsion associé, ou bien les deux chemins de transfert peuvent être pourvus de modulateurs de compression d'impulsion respectifs, avec des contrôleurs de compression d'impulsion qui sont associés un-à-un à ces modulateurs. Dans ce dernier cas, les deux chemins de transfert peuvent générer des variations temporelles qui ont de préférence des sens opposés de variation, pour des fréquences optiques respectives des deux composantes d'impulsion qui sont délivrées par ces chemins de transfert.

Possiblement, chaque contrôleur de compression d'impulsion peut être adapté pour commander, lors du fonctionnement du système LIDAR et pour la composante d'impulsion qui est délivrée par le chemin de transfert auquel appartient ce contrôleur de compression d'impulsion, une variation progressive de fréquence optique pendant la durée de l'impulsion. En outre, cette variation progressive de fréquence optique peut présenter un taux de variation qui est sensiblement constant pendant la durée de l'impulsion.

Au sein de la voie de détection, la voie de mesure et la voie de référence peuvent être distinctes, en étant connectées en parallèle à des entrées séparées du module de traitement numérique. Dans ce cas, la voie de détection comprend :
- un premier chemin de détection qui est dédié à constituer la voie de mesure, et qui comprend un premier photodétecteur agencé pour recevoir les rayonnements qui correspondent un-à-un aux impulsions émises par la voie d'émission après que ces impulsions ont été rétroréfléchies ou rétrodiffusées par la cible, ce premier chemin de détection délivrant les signaux de détection de mesure ; et
- un second chemin de détection, qui est distinct du premier chemin de détection et qui est dédié à constituer la voie de référence en comprenant un second photodétecteur agencé pour recevoir les rayonnements qui sont représentatifs des impulsions telles qu'émises par la voie d'émission, ce second chemin de détection délivrant les signaux de détection de référence.
Le module de traitement numérique est alors connecté à des sorties respectives des premier et second chemins de détection pour recevoir les signaux de détection de mesure et les signaux de détection de référence.

Alternativement, lorsque le système LIDAR est dédié à mesurer des distances qui sont suffisamment grandes pour que les signaux de détection de mesure soient séparés temporellement des signaux de détection de référence, du fait du délai de propagation aller-retour des impulsions entre le système LIDAR et la cible, les deux fonctions de voie de mesure et de voie de référence peuvent être réalisées par un même chemin de détection commun au sein de la voie de détection. Les signaux de détection de mesure sont alors séparés de ceux des signaux de détection de référence par des portes temporelles. Une telle réalisation de la voie de détection est économique en termes de composants utilisés. En outre, elle supprime des écarts de traitement qui pourraient exister lorsque les deux voies de mesure et de référence sont distinctes. Autrement dit, la voie de détection comprend dans ce cas :
- un photodétecteur commun aux deux fonctions de voie de mesure et de voie de référence, qui est destiné à recevoir pendant des fenêtres temporelles séparées, d'une part les rayonnements qui correspondent un-à-un aux impulsions émises par la voie d'émission après que ces impulsions ont été rétroréfléchies ou rétrodiffusées par la cible, et d'autre part les rayonnements qui sont représentatifs des impulsions telles qu'émises par la voie d'émission, en délivrant des signaux de détection pendant chaque fenêtre temporelle ; et
- un contrôleur, qui affecte les signaux de détection délivrés par le photodétecteur commun, soit en tant que signaux de détection de mesure soit en tant que signaux de détection de référence, en fonction des fenêtres temporelles.

Selon un premier perfectionnement qui est possible pour un système LIDAR conforme à l'invention, ce système peut être pourvu d'une double détection hétérodyne, ou DDH. Ce perfectionnement de double détection hétérodyne permet d'augmenter les valeurs de rapports signal-sur-bruit pour chacune de la voie de mesure et de la voie de référence. Pour cela, la voie de détection peut être couplée optiquement pour recevoir en outre d'autres parties du rayonnement de la source laser, d'une part en même temps que les rayonnements qui correspondent un-à-un aux impulsions émises par la voie d'émission après que ces impulsions ont été rétroréfléchies ou rétrodiffusées par la cible, et d'autre part en même temps que les rayonnements qui sont représentatifs des impulsions telles qu'émises par la voie d'émission. Un tel premier perfectionnement procure une sensibilité supérieure au système LIDAR, notamment pour des utilisations de celui-ci où la cible possède un pouvoir de rétro-réflexion ou rétrodiffusion qui est très faible.

Dans ce cas, le module de traitement numérique peut être adapté pour mélanger des composantes des signaux de détection de mesure qui sont issues respectivement des deux chemins de transfert de façon à obtenir un signal temporel de produit pour la voie de mesure qui soit dépourvu de fluctuations de phase de la source laser. De même, il peut aussi être adapté pour mélanger par ailleurs des composantes des signaux de détection de référence qui sont issues respectivement des deux chemins de transfert de façon à obtenir séparément un signal temporel de produit pour la voie de référence qui soit aussi dépourvu des fluctuations de phase de la source laser. Alors, le module de traitement numérique peut calculer la fonction de corrélation entre les signaux temporels de produit respectifs de la voie de mesure et de la voie de référence. Ainsi, la fonction de corrélation n'est pas affectée par un bruit de phase de la source laser, et présente un rapport signal-sur-bruit qui est accru. Un résultat de mesure qui est obtenu à partir de cette fonction de corrélation est plus précis.

Selon un second perfectionnement qui est aussi possible pour un système LIDAR conforme à l'invention, ce système peut être adapté pour que chaque impulsion ait un spectre composé de plusieurs composantes spectrales séparées. Autrement dit, chaque impulsion peut avoir un spectre en forme de peigne. Le nombre de composantes spectrales séparées qui constituent un tel peigne peut être quelconque. Un tel second perfectionnement permet d'augmenter encore l'énergie des signaux de détection sans atteindre un seuil prédéterminé de diffusion Brillouin stimulée pour chaque composante spectrale du peigne. Le système LIDAR peut ainsi être encore plus approprié à des utilisations où la cible possède un pouvoir de rétro-réflexion ou rétrodiffusion qui est très faible, ou dont les caractéristiques varient en fonction de la composante spectrale.

Le premier perfectionnement, qui concerne l'utilisation d'une double détection hétérodyne, peut être appliqué sans le second perfectionnement, c'est-à-dire sans que le spectre de chaque impulsion soit en forme de peigne.

Pour des modes de réalisation qui combinent les deux perfectionnements, la voie d'émission peut comprendre en outre :
- un premier modulateur de génération de peigne, qui est agencé pour être effectif sur les composantes de chaque impulsion qui sont délivrées par les deux chemins de transfert ; et
- un premier contrôleur de peigne, qui est connecté pour contrôler le premier modulateur de génération de peigne, et configuré pour appliquer à ce premier modulateur de génération de peigne un premier signal de contrôle constitué de plusieurs premières raies spectrales équidistantes, ces premières raies spectrales étant séparées par un premier incrément entre deux quelconques de celles-ci qui sont voisines spectralement. Simultanément, la voie de détection peut comprendre en outre :
- un second modulateur de génération de peigne, qui est agencé pour être effectif sur les ainsi-nommées autres parties du rayonnement de la source laser d'une part en même temps que sont détectés les rayonnements qui correspondent un-à-un aux impulsions émises par la voie d'émission après que ces impulsions ont été rétroréfléchies ou rétrodiffusées par la cible, et d'autre part en même temps que sont détectés les rayonnements qui sont représentatifs des impulsions telles qu'émises par la voie d'émission ; et
- un second contrôleur de peigne, qui est connecté pour contrôler le second modulateur de génération de peigne, et configuré pour appliquer à ce second modulateur de génération de peigne un second signal de contrôle constitué de plusieurs secondes raies spectrales équidistantes, ces secondes raies spectrales étant séparées par un second incrément entre deux quelconques de celles-ci qui sont voisines spectralement. Une différence entre les premier et second incréments est alors supérieure à une largeur spectrale qui est utilisée pour obtenir l'effet de compression d'impulsion. En outre, le module de traitement numérique est configuré pour additionner ou moyenner des contributions de signaux de détection qui sont relatives à des couples différents de raies optiques, chaque couple de raies optiques étant formé par une première raie optique produite par le premier modulateur de génération de peigne et une seconde raie optique produite par le second modulateur de génération de peigne.

Encore lorsque les deux perfectionnements sont combinés, la fonction de corrélation peut de nouveau être calculée entre des signaux temporels de produit respectifs de la voie de mesure et de la voie de référence, pour ne pas être affectée par le bruit de phase de la source laser. Dans ce cas, le signal temporel de produit de la voie de mesure peut être obtenu en mélangeant deux composantes spectrales de peigne qui sont issues respectivement des deux chemins de transfert et ont été rétroréfléchies ou rétrodiffusées par la cible, et le signal temporel de produit de la voie de référence peut être obtenu en mélangeant aussi deux composantes spectrales de peigne qui sont issues respectivement des deux chemins de transfert mais qui appartiennent aux rayonnements représentatifs des impulsions telles qu'émises par la voie d'émission. Pour cela, chaque mélange est effectué de façon à éliminer l'effet des fluctuations de phase de la source laser.

En outre, le second perfectionnement, selon lequel le spectre de chaque impulsion est en forme de peigne, peut aussi être appliqué sans le premier perfectionnement, c'est-à-dire sans utiliser de double détection hétérodyne. Dans ce cas, la voie d'émission peut comprendre en outre :
- un premier modulateur de génération de peigne, qui est disposé dans l'un des deux chemins de transfert de façon à être effectif sur la partie de rayonnement qui est transmise par ce chemin de transfert ;
- un premier contrôleur de peigne, qui est connecté pour contrôler le premier modulateur de génération de peigne, et configuré pour appliquer à ce premier modulateur de génération de peigne un premier signal de contrôle constitué de plusieurs premières raies spectrales équidistantes, ces premières raies spectrales étant séparées par un premier incrément entre deux quelconques celles-ci qui sont voisines spectralement ;
- un second modulateur de génération de peigne, qui est disposé dans l'autre des deux chemins de transfert de façon à être effectif sur la partie de rayonnement qui est transmise par cet autre chemin de transfert ; et
- un second contrôleur de peigne, qui est connecté pour contrôler le second modulateur de génération de peigne, et configuré pour appliquer à ce second modulateur de génération de peigne un second signal de contrôle constitué par plusieurs secondes raies spectrales équidistantes, ces secondes raies spectrales étant séparées par un second incrément entre deux quelconques de celles-ci qui sont voisines spectralement. Comme précédemment, la différence entre les premier et second incréments est encore supérieure à une largeur spectrale qui est utilisée pour obtenir l'effet de compression d'impulsion, et le module de traitement numérique est configuré pour additionner ou moyenner des contributions de signaux de détection qui sont relatives à des couples différents de raies optiques, chaque couple de raies optiques étant formé par une première raie optique produite par le premier modulateur de génération de peigne et une seconde raie optique produite par le second modulateur de génération de peigne.

Lorsque le second perfectionnement est utilisé, avec ou sans le premier perfectionnement, les premier et second modulateurs de génération de peignes peuvent être de type modulateurs électro-optiques.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1a] est un schéma synoptique d'un premier système LIDAR conforme à l'invention, sans des perfectionnements optionnels de double détection hétérodyne ni de spectre des impulsions en forme de peigne ;
[Fig. 1b] est le diagramme spectral de parties de rayonnement qui sont reçues en entrée par une voie de détection du premier système LIDAR de [Fig. 1a];
[Fig. 2a] correspond à [Fig. 1a] pour un deuxième système LIDAR conforme à l'invention, qui met en œuvre le perfectionnement de double détection hétérodyne, mais sans le perfectionnement du spectre des impulsions en forme de peigne ;
[Fig. 2b] correspond à [Fig. 1b] pour le deuxième système LIDAR de [Fig. 2a] ;
[Fig. 2c] montre un détail d'un module de traitement numérique qui peut être utilisé dans le deuxième système LIDAR de [Fig. 2a] ;
[Fig. 3a] correspond à [Fig. 1a] pour un troisième système LIDAR conforme à l'invention, qui met en œuvre les deux perfectionnements de double détection hétérodyne et de spectre des impulsions en forme de peigne ;
[Fig. 3b] correspond à [Fig. 2b] pour le troisième système LIDAR de [Fig. 3a] ;
[Fig. 3c] est un diagramme spectral relatif à des signaux de détection du troisième système LIDAR de [Fig. 3a] ;
[Fig. 3d] correspond à [Fig. 2c] pour le troisième système LIDAR de [Fig. 3a] ;
[Fig. 4a] correspond à [Fig. 1a] pour un quatrième système LIDAR conforme à l'invention, qui met en œuvre le perfectionnement du spectre des impulsions en forme de peigne, mais sans le perfectionnement de double détection hétérodyne ; et
[Fig. 4b] correspond à [Fig. 1b] pour le quatrième système LIDAR de [Fig. 4a].

### Description détaillée de l'invention

Dans ces figures, tous les éléments ne sont représentés que symboliquement. En outre, des références identiques qui sont indiquées dans des figures différentes désignent des éléments identiques ou qui ont des fonctions identiques.

Pour tous les modes de réalisation de l'invention qui sont décrits dans la suite, la référence 100 désigne un système LIDAR conforme à l'invention, et les références 10 et 20 désignent sa voie d'émission et sa voie de détection, respectivement. La voie d'émission 10 comprend les composants suivants : une source laser 11, un premier coupleur 12, un premier chemin de transfert 13a, un second chemin de transfert 13b, un second coupleur 16, un amplificateur optique 17, un séparateur par division d'amplitude 18, un circulateur optique 21 et une optique d'émission 22, notée OPT. Tous ces composants de la voie d'émission 10 peuvent être réalisés en technologie de fibres optiques. Dans ce cas, la source laser 11 peut être conçue pour produire un rayonnement à 1560 nm (nanomètre) environ, les coupleurs 12 et 16 peuvent être des coupleurs en Y par champs évanescents, et l'amplificateur optique 17 peut être du type EDFA pour «Erbium-Doped Fiber Amplifier» en anglais. Le séparateur 18 peut être à rapport d'intensités de sortie 95%-5% à titre d'exemple, sa sortie à 95% d'intensité étant dédiée à la voie d'émission 10 en direction de l'optique d'émission 22 à travers le circulateur optique 21, et sa sortie à 5% d'intensité étant dédiée pour transmettre une partie du rayonnement produit par la voie d'émission 10 à une voie de référence 23b de la voie de détection 20.

La voie d'émission 10 est à double faisceau de sondage, ou DFS : elle est adaptée pour émettre en direction d'une cible T qui est externe au système LIDAR 100, des impulsions de rayonnement I qui possèdent au moins deux composantes spectrales dont les valeurs respectives de fréquence optique sont différentes. Pour cela, le premier chemin de transfert 13a peut comprendre un premier modulateur 14a et un premier générateur de signaux électriques 15a. De même, le second chemin de transfert 13b peut comprendre un second modulateur 14b et un second générateur de signaux électriques 15b. Les deux modulateurs 14a et 14b peuvent être chacun du type modulateur acousto-optique, et sont notés pour cette raison MAO1 et MAO2, respectivement. Les deux générateurs de signaux électriques 15a et 15b peuvent être chacun du type générateur de formes d'ondes arbitraires, ou «Arbitrary Waveform Generator» en anglais, et sont notés pour cette raison AWG1 et AWG2, respectivement. Une sortie électrique du générateur 15a (respectivement 15b) est connectée à une entrée de modulation du modulateur 14a (resp. 14b) de façon à ce qu'une partie du rayonnement qui est issue de la source laser 11 et qui est transmise par le chemin de transfert 13a (resp. 13b) soit modifiée par le modulateur 14a (resp. 14b) conformément au signal électrique produit par le générateur 15a (resp. 15b). Les deux chemins de transfert 13a et 13b sont disposés en parallèle entre les coupleurs 12 et 16, et ces derniers sont sélectionnés pour que chaque chemin de transfert transmette environ la moitié de l'énergie du rayonnement qui est produit par la source laser 11.

Les générateurs de signaux électriques 15a et 15b peuvent être programmés pour découper le rayonnement qui provient de la source laser 11 en impulsions successives, de sorte que chaque impulsion I qui sort de l'amplificateur optique 17 soit constituée de deux composantes d'impulsion synchronisées, l'une délivrée par le chemin de transfert 13a et l'autre délivrée par le chemin de transfert 13b.

Le générateur 15a peut en outre être programmé pour délivrer, pendant chaque fenêtre temporelle qui correspond à une impulsion I, un premier signal électrique sinusoïdal qui provoque une augmentation de fréquence optique de 100 MHz (mégahertz), par exemple, pour la composante d'impulsion qui est délivrée par le chemin de transfert 13a.

Simultanément, le générateur 15b peut en outre être programmé pour délivrer un second signal électrique qui provoque une modulation de fréquence optique pour la composante d'impulsion qui est délivrée par le chemin de transfert 13b. Notamment, ce second signal électrique peut être de type sinusoïdal avec une fréquence qui augmente continûment pendant chaque fenêtre temporelle qui correspond à une impulsion I, de 105 MHz en début d'impulsion à 125 MHz en fin d'impulsion par exemple. Ainsi, la fréquence optique de la composante d'impulsion qui est délivrée par le chemin de transfert 13b est augmentée selon un incrément variant progressivement de 105 MHz à 125 MHz pendant chaque impulsion I, par rapport au rayonnement tel que reçu en entrée par le chemin de transfert 13b. La vitesse de variation de cette fréquence optique en fonction du temps peut être sensiblement constante pendant la durée de chaque impulsion I.

La voie de détection 20 partage l'optique 22, le circulateur optique 21 et le séparateur 18 avec la voie d'émission 10. Elle comprend en outre deux chemins de détection 23a et 23b, et un module de traitement numérique 27, noté NUM. Le chemin de détection 23a est destiné à constituer une voie de mesure : son entrée optique est connectée à la sortie du circulateur 21 qui est dédiée à la voie de détection 20. Il comprend dans l'ordre : un photodétecteur 24a noté DETECT.1, un amplificateur 25a noté AMPL.1 et un filtre 26a noté FILT.1. Ainsi, la voie de mesure 23a reçoit en entrée des parties RI des impulsions I qui ont été rétroréfléchies ou rétrodiffusées par la cible T, et ces parties d'impulsions RI sont détectées par le photodétecteur 24a. Le photodétecteur 24a produit alors un signal de détection de mesure qui est amplifié, filtré puis transmis à une première entrée du module de traitement numérique 27. Parallèlement, le chemin de détection 23b est destiné à constituer une voie de référence : son entrée optique est connectée à la sortie du séparateur 18 qui est dédiée à la voie de détection 20. Il comprend dans l'ordre : un photodétecteur 24b noté DETECT.2, un amplificateur 25b noté AMPL.2 et un filtre 26b noté FILT.2. Ainsi, la voie de référence 23b reçoit en entrée des parties des impulsions I telles que celles-ci sont émises par le système LIDAR 100 en direction de la cible T, et ces parties des impulsions I sont détectées par le photodétecteur 24b. Ce dernier produit alors un signal de détection de référence qui est amplifié, filtré puis transmis à une autre entrée du module de traitement numérique 27. Pour les valeurs numériques citées dans la présente description, les filtres 26a et 26b qui sont analogiques du type passe-bas peuvent avoir une fréquence de coupure d'environ 150 MHz-200 MHz, pour supprimer les repliements de spectres.

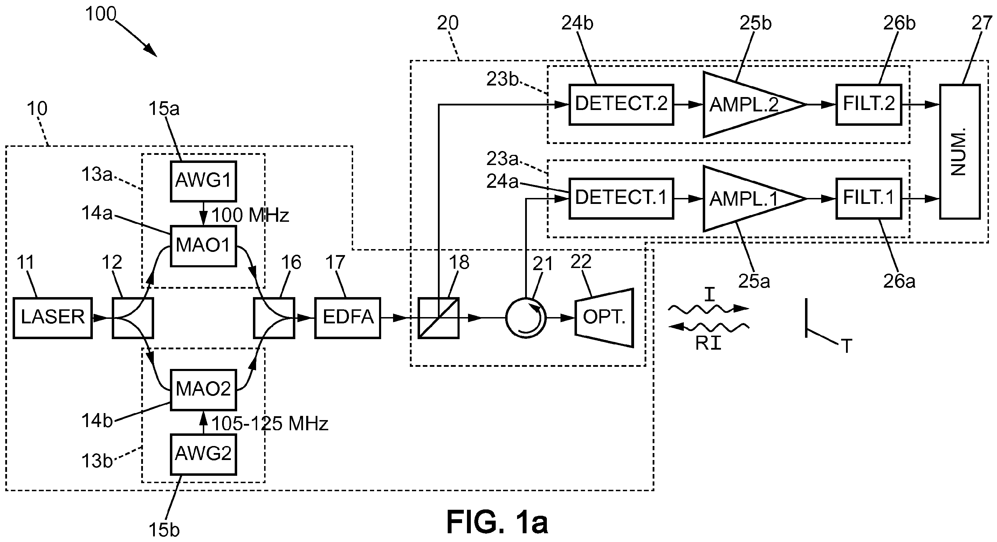

Le système LIDAR 100 de [Fig. 1a], à double faisceau de sondage (DFS), n'utilise pas de double détection hétérodyne et est dit à détection directe. Les signaux qui sont transmis séparément par la voie de mesure 23a et par la voie de référence 23b sont constitués chacun d'une superposition de deux composantes de parties d'impulsions RI qui ont le même retard de propagation par rapport à l'émission de la source laser 11. La superposition de ces deux composantes dans chacune des voies de mesure 23a et de référence 23b n'est donc pas sensible à des fluctuations de phase de la source laser 11. De telles fluctuations de phase de la source laser 11 telles qu'elles sont présentes dans chaque composante des parties d'impulsions RI disparaissent alors automatiquement lors de leur battement dans le photodétecteur, celui-ci produisant un signal dont la phase instantanée est égale à la différence de phase des deux composantes spectrales.

Lors d'un fonctionnement du système LIDAR 100, le module de traitement numérique 27 calcule une fonction de corrélation entre le signal de détection de mesure qui est délivré en sortie par la voie de mesure 23a et le signal de détection de référence qui est délivré en sortie par la voie de référence 23b. Dans la pratique, de tels signaux de corrélation sont calculés pour plusieurs impulsions I qui sont émises successivement, puis les puissances de tous les signaux de corrélation, c'est-à-dire leurs modules élevés au carré, sont accumulés. Le résultat de mesure pour la distance d'éloignement de la cible T est alors égal à la moitié du décalage temporel qui correspond au maximum de la fonction accumulée de puissance de corrélation. En effet, ce décalage temporel du maximum est égal au temps de vol d'aller et retour du rayonnement entre le système LIDAR 100 et la cible T.

Dans le fonctionnement qui vient d'être décrit, le modulateur 14b et le module de traitement numérique 27 réalisent ensemble un effet de compression d'impulsion. Pour cette raison, le modulateur 14b et le générateur 15b ont été appelés modulateur de compression d'impulsion et contrôleur de compression d'impulsion, respectivement, dans la partie générale de la présente description. Grâce à cet effet de compression d'impulsion, le résultat de la fonction de corrélation qui est délivré par le module 27 présente un rapport signal-sur-bruit qui est augmenté, à valeur égale d'énergie cumulée des impulsions I qui sont utilisées pour effectuer une mesure de distance. Cette augmentation du rapport signal-sur-bruit apparaît dans un facteur B·T par rapport à un système LIDAR sans compression d'impulsion, où B est la largeur spectrale de modulation contrôlée par le générateur 15b et T est la durée de chaque impulsion I. Dans l'exemple décrit, B est égale à 125 MHz - 105 MHz = 20 MHz et T peut être égale à 1 ms (milliseconde), produisant un facteur de compression d'impulsion qui est égal à 20000. Une amélioration de la résolution en distance que procure le système LIDAR 100 en résulte, équivalente à l'utilisation d'impulsions ultra-courtes qui auraient des durées individuelles d'environ 80 ns (nanoseconde). Selon un autre point de vue, l'effet de compression d'impulsion permet de réduire l'énergie totale des impulsions I qui sont émises pour effectuer une mesure de distance, à valeur égale du rapport signal-sur-bruit. Une telle réduction permet à la puissance-crête de chaque impulsion I de rester en dessous d'un seuil de diffusion Brillouin stimulée qui est relatif à la voie d'émission 10, et/ou permet de réduire le nombre des impulsions I qui sont nécessaires pour effectuer une mesure de distance. Dans le cas de cette dernière alternative, l'effet de compression d'impulsion permet de réduire la durée qui est nécessaire pour effectuer une mesure de distance.

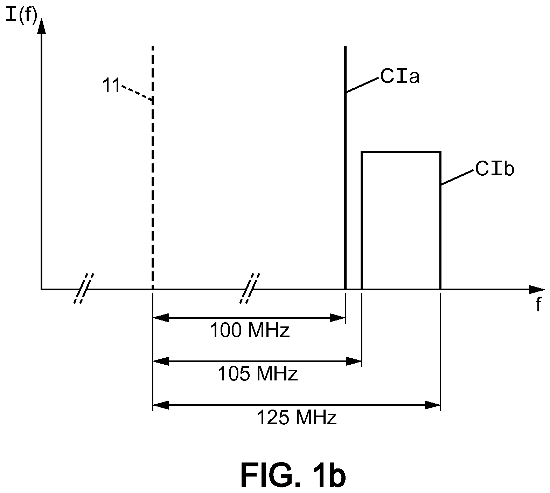

Le système LIDAR 100 de [Fig. 1a] possède la constitution qui vient d'être décrite, en étant dépourvu des perfectionnements de double détection hétérodyne et de spectre d'impulsion en forme de peigne. [Fig. 1b] montre le spectre des parties de rayonnement qui sont reçues en entrée par la voie de mesure 23a et par la voie de référence 23b. Ces deux parties de rayonnement possèdent le même spectre, ou sensiblement le même spectre, puisque celle qui est reçue par la voie de mesure 23a ne se distingue de celle qui est reçue par la voie de référence 23b que d'une part par le retard de propagation du rayonnement entre l'optique d'émission 22 et la cible T, si cette dernière est immobile par rapport au système LIDAR 100, et d'autre part par la différence d'amplitude entre les deux parties du rayonnement, celle reçue par la voie de mesure étant bien plus faible que celle reçue par la voie de référence, en raison du parcours atmosphérique supplémentaire effectué. Chacune de ces parties de rayonnement est constituée par la superposition des composantes d'impulsion qui sont délivrées par le chemin de transfert 13a, notées Cla, et qui sont décalées spectralement de 100 MHz par rapport au rayonnement de la source laser 11 dans l'exemple considéré, et par les composantes d'impulsion qui sont délivrées par le chemin de transfert 13b, notées Clb, et qui occupent une bande spectrale décalée de 105 MHz à 125 MHz par rapport au rayonnement de la source laser 11. Dans le diagramme de [Fig. 1b], l'axe horizontal repère les valeurs de la fréquence optique, notée f, l'axe vertical repère les valeurs d'intensité spectrale, notées I(f), et la référence 11 désigne la position spectrale de l'émission laser de la source 11. Pour chacune de la voie de mesure 23a et de la voie de référence 23b, le signal de détection qui est délivré au module de traitement numérique 27 correspond à l'interférence entre les composantes d'impulsion Cla et Clb.

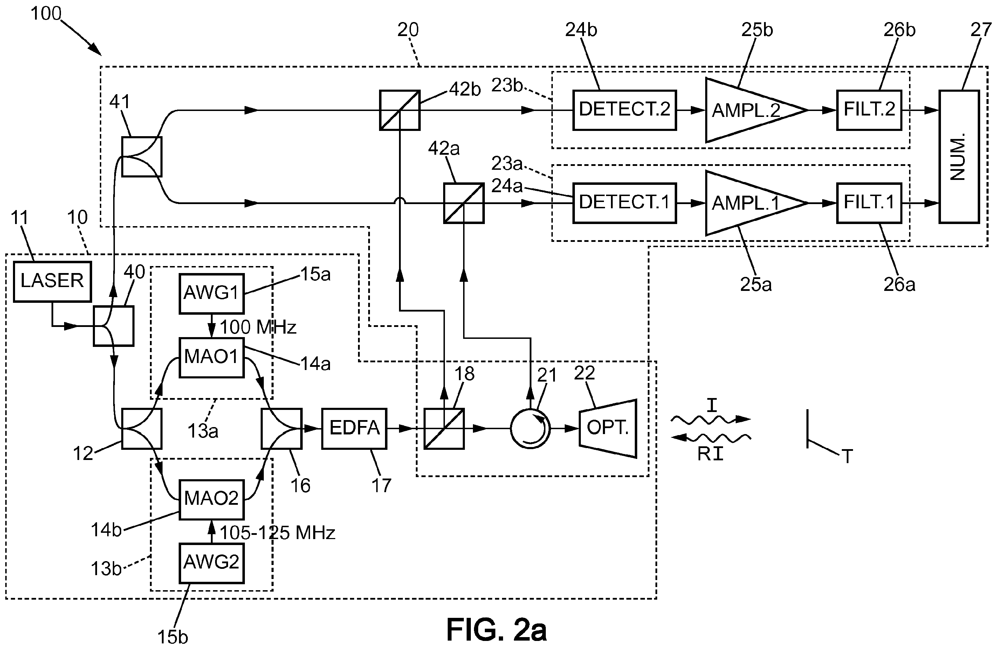

Le système LIDAR 100 de [Fig. 2a] correspond à celui de [Fig. 1a], mais en étant complété pour mettre en œuvre une double détection hétérodyne (DDH). La double détection hétérodyne a pour effet d'augmenter la valeur du rapport signal-sur-bruit dans chacune des voies de mesure 23a et de référence 23b, mais le mélange des signaux entre ces deux voies peut être dégradé par les fluctuations de phase de la source laser 11, lorsque la distance d'éloignement de la cible T devient comparable ou supérieure à la moitié de la longueur de cohérence de la source laser 11. Pour cela, une partie du rayonnement qui est produit par la source laser 11 est prélevée à la sortie de celle-ci par un séparateur 40, le prélèvement d'une partie mineure de rayonnement étant suffisante. Cette partie prélevée de rayonnement, couramment appelée signal d'oscillateur local dans le jargon de l'Homme du métier, est ensuite divisée en deux pour être transmise en parallèle aux entrées optiques de la voie de mesure 23a et de la voie de référence 23b. Par exemple, le séparateur 40 peut être à couplage par champs évanescents. Un séparateur par division d'intensité dans le rapport 50%-50%, désigné par la référence 41, est utilisé pour diviser en deux sous-faisceaux la partie prélevée du rayonnement de la source laser 11. Un autre séparateur 42a, utilisé pour réaliser une fonction de réunion de faisceaux, est disposé pour superposer l'un des deux sous-faisceaux issus du séparateur 11 avec les parties d'impulsions RI qui proviennent du circulateur 21, après que ces parties d'impulsions RI ont été rétroréfléchies ou rétrodiffusées par la cible T. Encore un autre séparateur 42b, aussi utilisé pour réaliser la fonction de réunion de faisceaux, est disposé pour superposer l'autre des deux sous-faisceaux issus du séparateur 41 avec les parties de rayonnement qui proviennent du séparateur 18, et qui sont représentatives des impulsions I telles qu'émises par le système LIDAR 100 en direction de la cible T. Avec un tel agencement, le photodétecteur 24a effectue une détection hétérodyne des parties d'impulsions RI, et le photodétecteur 24b effectue indépendamment une détection hétérodyne des impulsions émises I.

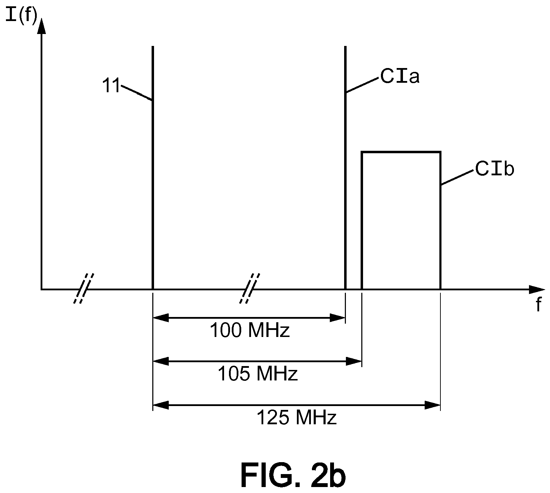

[Fig. 2b] montre le spectre des parties de rayonnement qui sont reçues en entrée par la voie de mesure 23a et par la voie de référence 23b, pour le système LIDAR 100 de [Fig. 2a]. Ces deux parties de rayonnement possèdent encore le même spectre, ou sensiblement le même spectre, pour les mêmes raisons que celles indiquées précédemment. Mais, ce spectre est maintenant constitué par la superposition des composantes d'impulsion Cla et Clb, avec en plus une composante monochromatique qui correspond à l'émission de la source laser 11, et qui est encore désignée par la référence 11 dans le diagramme spectral. Les positions relatives des trois composantes 11, Cla et Clb sont indiquées, et correspondent aux indications déjà présentes dans [Fig. 1b].

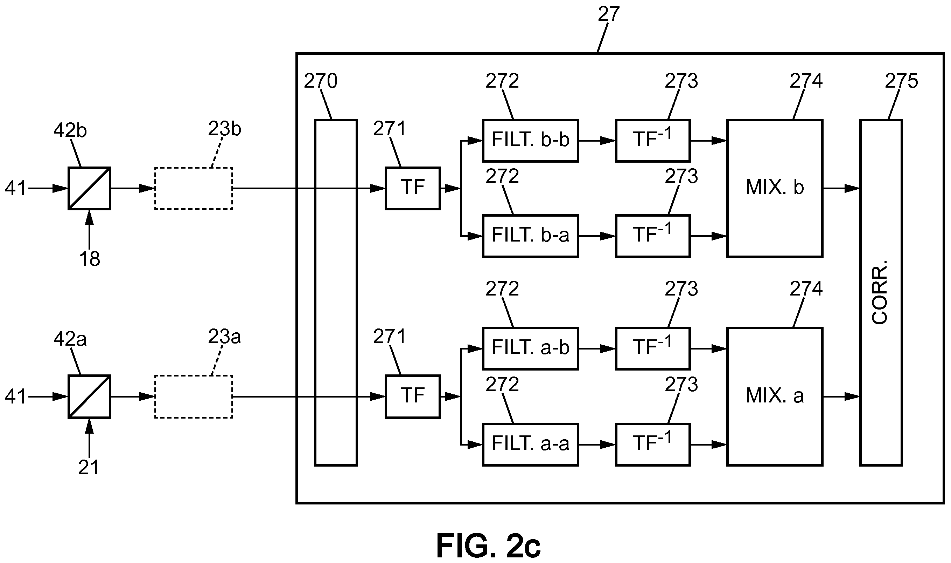

[Fig. 2c] montre symboliquement les principales étapes de traitement des signaux qui sont effectuées dans le module de traitement numérique 27. La référence 270 désigne des numérisations des signaux qui sont délivrés séparément par la voie de mesure 23a et par la voie de référence 23b, effectuées entrée du module 27. Des transformations de Fourier, notées TF et désignées par les références 271 sont alors effectuées indépendamment sur le signal de détection de mesure, issu de la voie de mesure 23a, et sur le signal de détection de référence, issu de la voie de référence 23b. Les références 272 désignent des filtres spectraux numériques. Les deux filtres 272 qui sont notés FILT. a-a et FILT. a-b sont de type passe-bande et sélectionnent les fréquences positives de la composante Cla et de la composante Clb, respectivement, telles ces deux composantes apparaissent dans [Fig. 2b]. Par exemple, la fenêtre spectrale du filtre FILT. a-a est de 97 MHz à 103 MHz, et celle du filtre FILT. a-b est de 103 MHz à 128 MHz. Les références 273 désignent des transformations de Fourier inverses, qui sont effectuées et en parallèle sur les signaux délivrés par les filtres 272, et notées TF⁻¹. Pour le signal de détection de mesure, le mélangeur 274 noté MIX. a calcule le produit de la composante Cla filtrée par le complexe conjugué de la composante Clb filtrée, pour chaque instant du signal de détection de mesure. Le signal temporel de produit qui est ainsi obtenu pour la voie de mesure 23a est alors dépourvu des fluctuations de phase de la source laser 11. Le signal de détection de référence est traité en parallèle de la même façon. Les filtres FILT. b-a et FILT. b-b ont les mêmes fenêtres spectrales que les filtres FILT. a-a et FILT. a-b, respectivement, et le mélangeur 274 noté MIX. b calcule le produit de la composante Cla filtrée par le complexe conjugué de la composante Clb filtrée, cette fois pour chaque instant du signal de détection de référence. Le signal temporel de produit qui est obtenu ainsi pour la voie de référence 23b est de même dépourvu des fluctuations de phase de la source laser 11. Le module 275, noté CORR. calcule alors la fonction de corrélation entre les deux signaux temporels de produits respectivement de la voie de mesure 23a et de la voie de référence 23b. La technique décrite ici est adaptée pour des traitements différés, mais il est possible de réaliser en temps réel des opérations équivalentes, par d'autres techniques de filtrage numérique connues de l'Homme du métier, par exemple en utilisant des filtres FIR, pour «Finite Impulse Response» en anglais, ou IIR, pour «Infinite Impulse Response» en anglais.

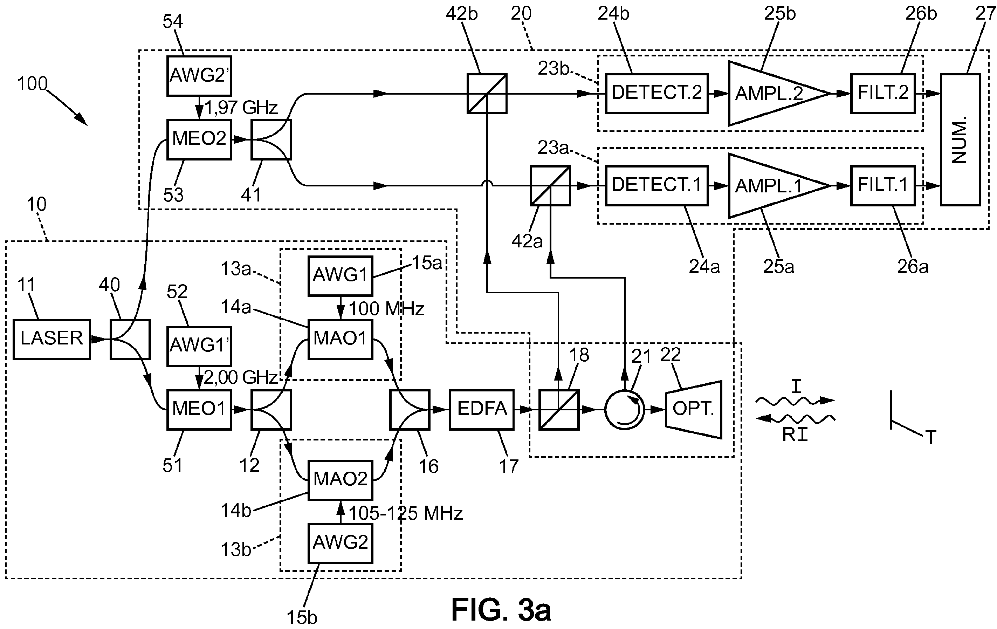

Le système LIDAR 100 de [Fig. 3a] correspond à celui de [Fig. 2a], mais en étant complété de nouveau pour mettre en œuvre en plus le perfectionnement du spectre des impulsions I en forme de peigne. Pour cela, deux modulateurs supplémentaires sont ajoutés au système LIDAR 100 : un premier modulateur supplémentaire 51 sur le trajet du rayonnement entre les séparateurs 40 et 12, et un second modulateur supplémentaire 53 sur le trajet du rayonnement entre les séparateurs 40 et 41. Autrement dit, le second modulateur supplémentaire 53 est inséré pour être effectif sur le signal d'oscillateur local. Les deux modulateurs supplémentaires 51 et 53 peuvent être du type électro-optique, et sont notés MEO1 et MEO2, respectivement. Chacun des modulateurs 51 et 53 est associé avec un générateur de signaux électriques dont une sortie électrique est connectée à une entrée de modulation du modulateur : une sortie électrique du générateur 52 (respectivement 54) est connectée à l'entrée de modulation du modulateur 51 (resp. 53). Les deux générateurs 52 et 54 peuvent être du type AWG, et sont notés pour cette raison AWG1' et AWG2', respectivement. Ils sont programmés pour produire des signaux électriques qui sont composés chacun d'une somme de plusieurs composantes sinusoïdales. Ainsi, le modulateur 51 transforme le rayonnement qui est transmis à partir de la source laser 11 aux deux chemins de transfert 13a et 13b en une superposition de plusieurs composantes spectrales monochromatiques ou quasi-monochromatiques, de sorte que le spectre de ce rayonnement ait une forme de peigne. Pour cette raison, le modulateur 51 a été appelé premier modulateur de génération de peigne dans la partie générale de la présente description, et le générateur 52 a été appelé premier contrôleur de peigne. Par exemple, le signal électrique qui est appliqué par le générateur 52 au modulateur 51 peut être tel que le rayonnement qui est transmis aux deux chemins de transfert 13a et 13b soit constitué par cinq composantes spectrales monochromatiques distantes de 2,00 GHz (gigahertz), en termes de fréquence optique. L'Homme du métier qualifie une telle composition spectrale de mini-peigne de fréquences.

Au sein du chemin de transfert 13a, le modulateur 14a applique un décalage de +100 MHz à l'ensemble du mini-peigne de chaque impulsion I qui est généré par le modulateur 51.

Simultanément, au sein du chemin de transfert 13b, le modulateur 14b applique une modulation selon un incrément de fréquence optique qui varie de +105 MHz à +125 MHz à l'ensemble du mini-peigne de chaque impulsion I qui est généré par le modulateur 51.

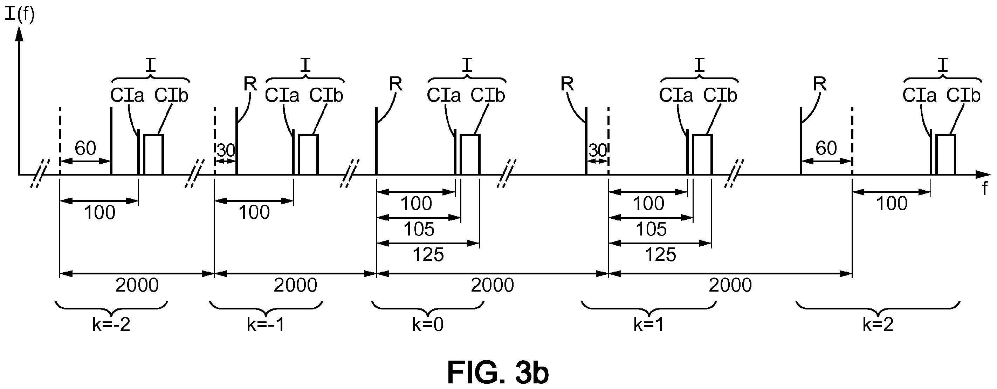

La composition spectrale des impulsions I qui sont émises par le système LIDAR 100 de [Fig. 3a], et qui sont détectées par la voie de référence 23b, est montrée dans le diagramme de [Fig. 3b] par les accolades désignées par la lettre I. Elle est constituée de cinq motifs spectraux qui sont identiques chacun à celui de [Fig. 2b], et qui sont séparés de 2000 MHz entre motifs voisins. Toutes les valeurs d'écarts fréquentiels qui sont indiquées dans ce diagramme sont exprimées en mégahertz. Cette composition spectrale est encore sensiblement identique à celle des parties d'impulsion RI qui ont été rétroréfléchies ou rétrodiffusées par la cible T, et qui sont détectées par la voie de mesure 23a.

Le modulateur 53 transforme les parties de rayonnement qui sont transmises à partir de la source laser 11 à la voie de mesure 23a et à la voie de référence 23b en deux superpositions identiques de plusieurs composantes spectrales monochromatiques ou quasi-monochromatiques, de sorte que le spectre de ces parties de rayonnement ait encore une forme de peigne. Le modulateur 53 a été appelé second modulateur de génération de peigne dans la partie générale de la présente description, et le générateur 54 second contrôleur de peigne. Pour l'exemple de réalisation de [Fig. 3a], le signal électrique qui est appliqué par le générateur 54 au modulateur 53 peut être tel que le peigne des parties de rayonnement qui sont transmises aux deux voies de mesure 23a et de référence 23b soit constitué par cinq composantes spectrales monochromatiques distantes de 1,97 GHz, en termes de fréquence optique.

Dans ces conditions, pour le spectre des parties de rayonnement qui sont reçues en entrée par la voie de mesure 23a et par la voie de référence 23b, la double détection hétérodyne combinée à l'utilisation des mini-peignes ajoute les cinq composantes qui sont désignées par les lettres R dans le diagramme de [Fig. 3b].

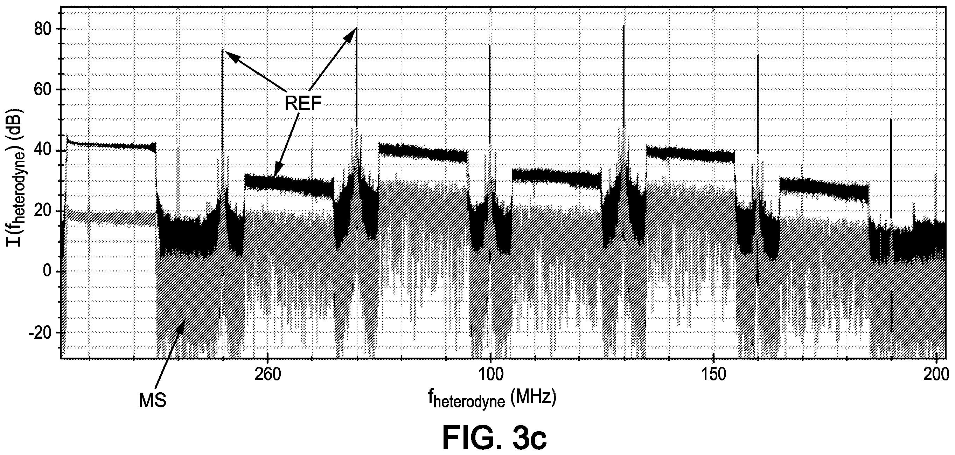

Pour chaque détection hétérodyne qui est réalisée dans la voie de mesure 23a ou dans la voie de référence 23b, chaque composante monochromatique R interfère avec la composante monochromatique Cla qui résulte des modulateurs 51 et 14a et qui lui est la plus proche, générant des composantes de signal de détection à 40 MHz, 70 MHz, 100 MHz, 130 MHz et 160 MHz, c'est-à-dire à 100 MHz + k·30 MHz, où k est un indice qui prend les valeurs -2, -1, 0, +1 et +2 pour repérer les composantes de peigne. Simultanément, chaque composante monochromatique R interfère en plus avec la composante modulée Clb qui résulte des modulateurs 51 et 14b et qui lui est aussi la plus proche, générant cinq composantes supplémentaires de signal de détection qui s'étendent respectivement entre 105 MHz + k·30 MHz et 125 MHz + k·30 MHz, où k est le même indice que précédemment. Le graphe inférieur dans le diagramme spectral de [Fig. 3c], désigné par MS, correspond au signal de détection de mesure qui est ainsi délivré par la voie de mesure 23a au module de traitement numérique 27, et le graphe supérieur dans le même diagramme de [Fig. 3c], désigné par REF, montre le signal de détection de référence qui est délivré simultanément par la voie de référence 23b au module 27. Dans ce diagramme, l'axe horizontal repère les valeurs de fréquence pour les signaux de détection hétérodyne, notées f_{heterodyne} et exprimées en mégahertz, et l'axe vertical repère les intensités spectrales correspondantes, notées I(f_{heterodyne}) et exprimées en décibels. A cause des perturbations que subissent les impulsions I lors de leur propagation entre l'optique d'émission 22 et la cible T, le signal de détection de mesure (graphe inférieur) présente une cohérence qui est inférieure à celle du signal de détection de référence (graphe supérieur) : niveau de bruit plus élevé et pics moins fins. Dans l'exemple décrit, les autres composantes spectrales du signal de détection de mesure (respectivement du signal de détection de référence) qui résultent d'interférences entre des dents de peignes associées à des valeurs différentes de l'indice k, sont supprimées par le filtre 26a (resp. 26b). Les inventeurs précisent par ailleurs que les spectres de [Fig. 3c] ont été obtenus expérimentalement. C'est pourquoi ils contiennent quelques raies parasites qui ne résultent pas directement de l'utilisation de l'invention.

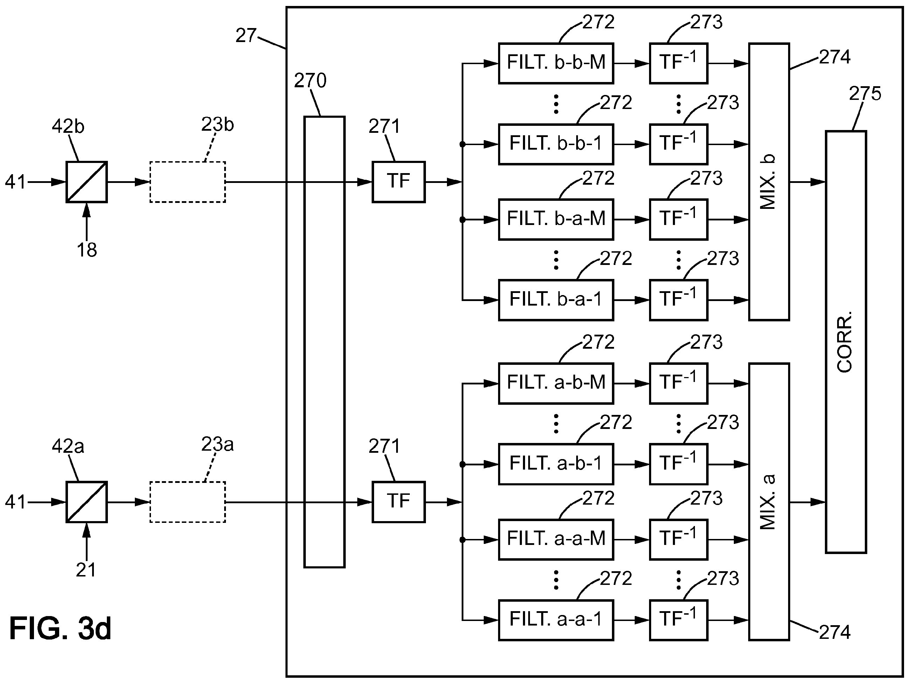

Le module de traitement numérique 27 mémorise les signaux de détection de mesure et de référence, indépendamment l'un de l'autre, pour une série d'impulsions I qui sont émises successivement, par exemple cent impulsions I successives. Les étapes de traitement qui sont effectuées par le module 27 de [Fig. 3d] relative au système LIDAR de [Fig. 3a] sont du même type que celles montrées dans [Fig. 2c] relative au système LIDAR de [Fig. 2a]. Le module 27 calcule d'abord, en appliquant une transformation de Fourier par rapport au temps (références 271), le spectre du signal de détection de mesure, puis filtre (références 272) au sein de ce spectre les composantes centrées à 100 MHz + k·30 MHz (filtres FILT. a-a-1 à filtres FILT. a-a-M), ainsi que les composantes qui sont comprises 105 MHz + k·30 MHz et 125 MHz + k·30 MHz (filtres FILT. a-b-1 à filtres FILT. a-b-M), où k est encore l'indice introduit plus haut dont les valeurs sont -2, -1, 0, +1 et +2, pour M égal à 5. Une transformation de Fourier inverse est ensuite appliquée à chaque composante filtrée (références 273), puis, séparément pour chaque valeur de k, le signal temporel de la composante Cla filtrée est multiplié par le complexe conjugué du signal temporel de la composante Clb filtrée (référence 274). M signaux temporels de produits sont ainsi obtenus pour la voie de mesure 23a, où M est encore le nombre de composantes spectrales monochromatiques dans le mini-peigne de chaque impulsion I. M signaux temporels de produits sont obtenus de la même façon, indépendamment et en parallèle, pour la voie de référence 23b en utilisant les filtres FILT. b-a-1 à FILT. b-a-M et FILT. b-b-1 à FILT. b-b-M. Le module 275 calcule alors une matrice carrée MxM d'intercorrélations, pour laquelle la fonction de corrélation qui est située à la colonne k et à la ligne k' dans cette matrice est relative au signal temporel de produit de la voie de mesure 23a pour la composante k du mini-peigne et au signal temporel de produit de la voie de référence 23b pour la composante k' du mini-peigne. M² évaluations sont ainsi obtenues pour la distance d'éloignement de la cible T par les maxima respectifs de toutes les fonctions de corrélation, et une moyenne pondérée de ces M² évaluations de distance procure un résultat de mesure qui présente un bruit réduit. La pondération peut notamment prendre en compte les variations de rapport signal-sur-bruit des M² évaluations disponibles.

Dans un fonctionnement alternatif, les composantes qui sont issues des filtres FILT. a-a-1 à FILT. a-a-M peuvent être superposées spectralement en supprimant numériquement les décalages de k·30 MHz, puis additionnées ou moyennées entre elles, de même que celles issues des filtres FILT. a-b-1 à FILT. a-b-M,. Le même traitement est réalisé indépendamment pour le signal de détection de référence : les composantes qui sont issues des filtres FILT. b-a-1 à FILT. b-a-M sont superposées spectralement d'une part en supprimant numériquement les décalages de k·30 MHz, puis additionnées ou moyennées entre elles, et celles issues des filtres FILT. b-b-1 à FILT. b-b-M sont superposées puis additionnées ou moyennées entre elles de même par ailleurs. Un fonctionnement qui est identique à celui de [Fig. 2c] peut alors être mis en œuvre à partir de là. Ce fonctionnement comprend d'utiliser les deux mélangeurs 274 MIX. a et MIX. b pour éliminer les fluctuations de phase de la source laser 11. Le résultat de la fonction de corrélation présente alors un pic très étroit dont la largeur réduite résulte de l'effet de compression d'impulsion combiné à celui de superposition cohérente des composantes spectrales de mini-peigne. De même que précédemment, la position temporelle de ce pic est égale à la durée de propagation aller-retour des impulsions I entre l'optique d'émission 22 et la cible T. Un tel calcul de fonction de corrélation peut être effectué de façon particulièrement économique, notamment en utilisant un module électronique dédié.

Optionnellement, le spectre qui est obtenu pour le signal de détection de mesure, respectivement de référence, peut être décalé en fréquence dans son ensemble pour devenir centré par rapport à la fréquence nulle. Alors chaque signal de détection recomposé, de mesure et de référence, qui a été ainsi centré sur la fréquence nulle possède un instant où sa fréquence instantanée de variation s'annule. L'écart entre l'instant d'annulation de fréquence qui est obtenu pour le signal de détection de mesure recomposé, et l'instant d'annulation de fréquence qui est obtenu pour le signal de détection de référence recomposé, correspond à la durée de propagation aller-retour des impulsions I entre l'optique d'émission 22 et la cible T.

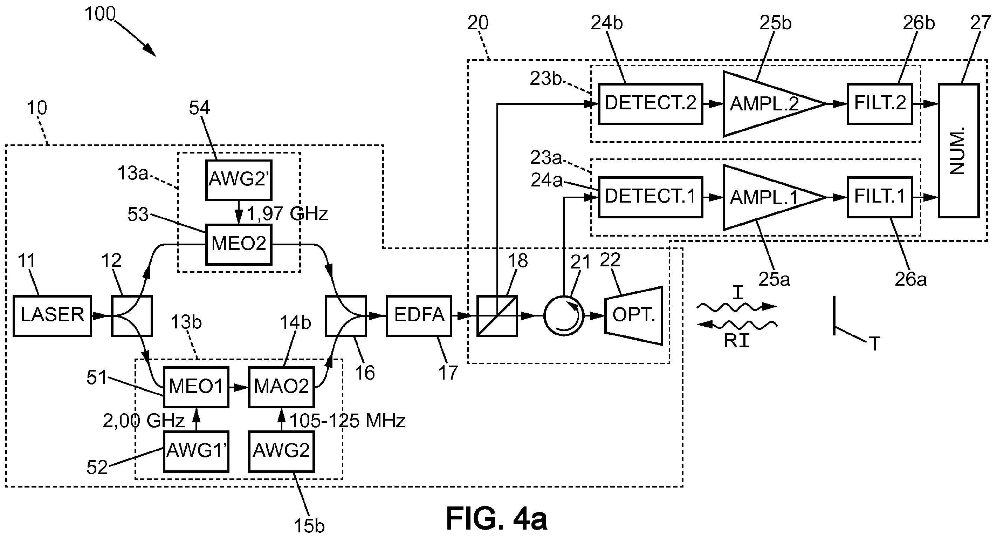

Le système LIDAR 100 de [Fig. 4a] incorpore le perfectionnement du spectre des impulsions I en forme de peigne mais sans celui de la double détection hétérodyne. Il est donc à détection directe et est obtenu à partir du mode de réalisation de [Fig. 1a] en supprimant le modulateur 14a et le générateur 15a, et en incorporant le modulateur de génération de peigne 53 et le générateur de contrôle de peigne 54 à leur place dans le chemin de transfert 13a. Le modulateur de génération de peigne 51 est inséré maintenant dans le chemin de transfert 13b, en série avec le modulateur de compression d'impulsion 14b. Les deux modulateurs de génération de peigne 51 et 53 sont associés avec leurs contrôleurs de peignes respectifs : le modulateur 51 avec le générateur 52 pour générer un spectre en forme de peigne avec un pas de 2,00 GHz par exemple, et le modulateur 53 avec le générateur 54 pour générer un autre spectre en forme de peigne avec un pas différent, par exemple égal à 1,97 GHz. Le modulateur de compression d'impulsion 14b peut être identique à celui des modes de réalisation précédents, avec le contrôleur 15b pour commander une modulation selon un incrément de fréquence optique qui varie de 105 MHz à 125 MHz.

Comme pour le système LIDAR de [Fig. 1a], le résultat de la fonction de corrélation du système LIDAR de [Fig. 4a] n'est pas sensible aux fluctuations de phase de la source laser 11.

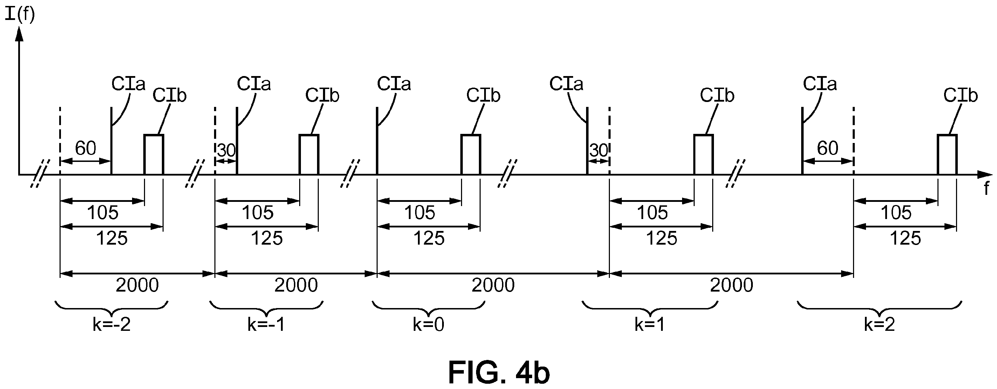

Le diagramme de [Fig. 4b] correspond à celui de [Fig. 3b] pour le mode de réalisation de [Fig. 4a]. Conformément à la suppression de la double détection hétérodyne, toutes les composantes spectrales correspondent à des impulsions I. Les composantes Cla correspondent au mini-peigne qui est généré dans le chemin de transfert 13a, avec le pas de fréquence optique égal à 1,97 GHz, et les composantes Clb sont celles qui sont générées dans le chemin de transfert 13b. Ces dernières résultent d'une convolution du mini-peigne qui possède le pas de fréquence optique égal à 2,00 GHz avec la modulation de compression d'impulsion qui est produite par le modulateur 14b. Le signal de détection de mesure (respectivement de référence) tel que délivré par le filtre 26a (resp. 26b) est une superposition cohérente des interférences de chaque composante monochromatique Clb avec la composante modulée Cla qui lui est la plus proche spectralement.

Bien que le fonctionnement du module de traitement numérique 27 ait été décrit pour le cas le plus complexe, correspondant au mode de réalisation de [Fig. 3a], l'Homme du métier saura l'adapter aux autres modes de réalisation sans faire preuve d'activité inventive. Notamment, l'étape finale de moyennage des évaluations de distance ou l'étape d'addition ou de moyennage des composantes spectrales qui correspondent à des valeurs différentes de l'indice k disparaît lorsque le perfectionnement du spectre de chaque impulsion I en forme de peigne n'est pas mis en œuvre.

Il est entendu que l'invention peut être reproduite en modifiant des aspects secondaires des modes de réalisation qui ont été décrits en détail ci-dessus, tout en conservant certains au moins des avantages cités. Notamment, les modifications suivantes peuvent être appliquées :
- utiliser un composant de type DPMZ, pour «Dual Parallel Mach-Zehnder» en anglais et tel que décrit dans l'article «Tunable Frequency Shifter Based on LiNbOs I&Q Modulators», de Alexandre Mottet et al., Photline Technologies, ZI Les Tilleroyes - Trépillot, 16 rue Auguste Jouchoux, 25000 Besançon, France, à la place de l'un au moins des modulateurs électro-optiques 51 et 53 ;
- lorsque les deux perfectionnements de double détection hétérodyne et de forme en peigne du spectre des impulsions sont utilisés, les signaux de détection peuvent être filtrés pour sélectionner le mélange d'une première raie du peigne des rayonnements qui correspondent aux impulsions après qu'elles ont été rétroréfléchies ou rétrodiffusées par la cible, avec une seconde raie du peigne des impulsions telles qu'émises en direction de la cible, ces premières et secondes raies étant associées à des valeurs différentes de l'indice k ;
- utiliser deux modulations simultanées, qui sont appliquées pour chaque impulsion séparément à l'une et l'autre des composantes d'impulsion qui sont transmises par les deux chemins de transfert 13a et 13b, l'une des modulations étant réalisée dans le chemins de transfert 13a et l'autre dans le chemin de transfert 13b. Par exemple, la modulation qui est réalisée dans le chemin de transfert 13a peut modifier la fréquence optique du rayonnement selon un incrément qui augmente progressivement de 90 MHz à 100 MHz au cours de chaque impulsion, et l'autre modulation qui est réalisée simultanément mais dans le chemin de transfert 13b peut modifier la fréquence optique selon un autre incrément qui diminue progressivement de 120 MHz à 110 MHz au cours de chaque impulsion ;
- utiliser des formes de modulation autres que des variations linéaires de la fréquence optique, y compris une modulation de phase à la place de la modulation de fréquence optique ; et
- n'utiliser qu'un seul chemin de détection dans la voie de détection 20 pour alimenter le module de traitement numérique 27 en signaux de détection, ce chemin de détection unique étant affecté pour chaque impulsion émise d'abord à la fonction de voie de référence puis à la fonction de voie de mesure, lorsque la cible est suffisamment éloignée pour que les débuts des signaux de détection de mesure ne recouvrent pas les fins des signaux de détection de référence.

Enfin, toutes les valeurs numériques qui ont été citées ne l'ont été qu'à titre d'illustration, et peuvent être changées.

## Revendications

1. Système LIDAR (100) comprenant une voie d'émission (10) et une voie de détection (20), la voie d'émission (10) comprenant une source laser (11) et étant adaptée pour émettre des impulsions (I) de rayonnement en direction d'une cible (T) qui est externe au système LIDAR,
le système LIDAR (100) étant **caractérisé en ce que** la voie d'émission (10) comprend deux chemins de transfert (13a, 13b) qui sont disposés en parallèle et agencés pour recevoir simultanément à des entrées respectives desdits chemins de transfert, des parties respectives d'un rayonnement de la source laser (11), et agencés en sortie pour superposer des composantes de chaque impulsion (I) délivrées par lesdits deux chemins de transfert,
l'un au moins des deux chemins de transfert (13a, 13b) comprenant :
- un modulateur, dit modulateur de compression d'impulsion (14b) ; et
- un contrôleur de compression d'impulsion (15b), connecté pour contrôler le modulateur de compression d'impulsion (14b) de façon à moduler la composante d'impulsion qui est délivrée par ledit chemin de transfert,
de sorte que lors d'un fonctionnement du système LIDAR (100), au moins deux composantes de chaque impulsion (I)
soient produites simultanément à partir du rayonnement qui provient de la source laser (11),
soient superposées au sein de l'impulsion (I) pendant une durée de ladite impulsion,
aient des spectres respectifs qui sont différents, et
l'une au moins des deux composantes de l'impulsion (I) soit modulée en phase ou en fréquence,
et **en ce que** la voie de détection (20) comprend au moins un photodétecteur (24a, 24b) et est agencée pour remplir des fonctions de :
- voie de mesure (23a), dédiée à détecter des rayonnements qui correspondent un-à-un aux impulsions (I) émises par la voie d'émission (10) après que lesdites impulsions ont été rétroréfléchies ou rétrodiffusées par la cible (T), en délivrant des signaux de détection de mesure ; et
- voie de référence (23b), dédiée à détecter des rayonnements qui sont représentatifs des impulsions (I) telles qu'émises par la voie d'émission (10), en délivrant des signaux de détection de référence ; et
la voie de détection (20) comprenant en outre un module de traitement numérique (27) qui est agencé pour recevoir les signaux de détection de mesure et les signaux de détection de référence, et qui est configuré pour calculer une fonction de corrélation entre lesdits signaux de détection de mesure et signaux de détection de référence,
de sorte que l'au moins une composante de chaque impulsion (I) qui est modulée, combinée avec la fonction de corrélation calculée, réalise un effet de compression d'impulsion.

2. Système LIDAR (100) selon la revendication 1, dans lequel chaque contrôleur de compression d'impulsion (14b) est adapté pour commander, lors du fonctionnement du système LIDAR et pour la composante d'impulsion qui est délivrée par le chemin de transfert (13b) auquel appartient ledit contrôleur de compression d'impulsion, une variation progressive de fréquence optique pendant la durée de l'impulsion (I).

3. Système LIDAR (100) selon la revendication 2, dans lequel chaque contrôleur de compression d'impulsion (14b) est adapté en outre pour que la variation progressive de fréquence optique présente un taux de variation qui est sensiblement constant pendant la durée de l'impulsion (I).

4. Système LIDAR (100) selon l'une quelconque des revendications 1 à 3, dans lequel la voie de détection (20) comprend :
- un premier chemin de détection dédié à constituer la voie de mesure (23a), comprenant un premier photodétecteur (24a) agencé pour recevoir les rayonnements qui correspondent un-à-un aux impulsions (I) émises par la voie d'émission (10) après que lesdites impulsions ont été rétroréfléchies ou rétrodiffusées par la cible (T), et délivrant les signaux de détection de mesure ; et
- un second chemin de détection, distinct du premier chemin de détection et dédié à constituer la voie de référence (23b), comprenant un second photodétecteur (24b) agencé pour recevoir les rayonnements qui sont représentatifs des impulsions (I) telles qu'émises par la voie d'émission (10), et délivrant les signaux de détection de référence, le module de traitement numérique (27) étant connecté à des sorties respectives des premier et second chemins de détection pour recevoir les signaux de détection de mesure et les signaux de détection de référence.

5. Système LIDAR (100) selon l'une quelconque des revendications 1 à 3, dans lequel la voie de détection (20) comprend :
- un photodétecteur commun aux deux fonctions de voie de mesure (23a) et de voie de référence (23b), qui est destiné à recevoir pendant des fenêtres temporelles séparées, d'une part les rayonnements qui correspondent un-à-un aux impulsions (I) émises par la voie d'émission (10) après que lesdites impulsions ont été rétroréfléchies ou rétrodiffusées par la cible (T), et d'autre part les rayonnements qui sont représentatifs des impulsions telles qu'émises par la voie d'émission, en délivrant des signaux de détection pendant chaque fenêtre temporelle ; et
- un contrôleur, qui affecte les signaux de détection délivrés par le photodétecteur commun, soit en tant que signaux de détection de mesure soit en tant que signaux de détection de référence, en fonction des fenêtres temporelles.

6. Système LIDAR (100) selon l'une quelconque des revendications précédentes, dans lequel la voie de détection (20) est couplée optiquement pour recevoir en outre d'autres parties du rayonnement de la source laser (11), d'une part en même temps que les rayonnements qui correspondent un-à-un aux impulsions (I) émises par la voie d'émission (10) après que lesdites impulsions ont été rétroréfléchies ou rétrodiffusées par la cible (T), et d'autre part en même temps que les rayonnements qui sont représentatifs des impulsions telles qu'émises par la voie d'émission.

7. Système LIDAR (100) selon la revendication 6, dans lequel le module de traitement numérique (27) est adapté pour mélanger d'une part des composantes des signaux de détection de mesure qui sont issues respectivement des deux chemins de transfert (13a, 13b) de façon à obtenir un signal temporel de produit pour la voie de mesure (23a) qui soit dépourvu de fluctuations de phase de la source laser (11), et pour mélanger d'autre part des composantes des signaux de détection de référence qui sont issues respectivement desdits deux chemins de transfert de façon à obtenir séparément un signal temporel de produit pour la voie de référence (23b) qui soit aussi dépourvu des fluctuations de phase de la source laser, et le module de traitement numérique est adapté pour calculer la fonction de corrélation entre les signaux temporels de produit respectifs de la voie de mesure et de la voie de référence.

8. Système LIDAR (100) selon la revendication 6, dans lequel
la voie d'émission (10) comprend en outre :
- un premier modulateur de génération de peigne (51), qui est agencé pour être effectif sur les composantes de chaque impulsion (I) qui sont délivrées par les deux chemins de transfert (13a, 13b) ; et
- un premier contrôleur de peigne (52), qui est connecté pour contrôler le premier modulateur de génération de peigne (51), et configuré pour appliquer audit premier modulateur de génération de peigne un premier signal de contrôle constitué de plusieurs premières raies spectrales équidistantes, lesdites premières raies spectrales étant séparées par un premier incrément entre deux quelconques desdites premières raies qui sont voisines spectralement,
la voie de détection (20) comprend en outre :
- un second modulateur de génération de peigne (53), qui est agencé pour être effectif sur lesdites autres parties du rayonnement de la source laser (11) d'une part en même temps que sont détectés les rayonnements qui correspondent un-à-un aux impulsions (I) émises par la voie d'émission (10) après que lesdites impulsions ont été rétroréfléchies ou rétrodiffusées par la cible (T), et d'autre part en même temps que sont détectés les rayonnements qui sont représentatifs des impulsions telles qu'émises par la voie d'émission ; et
- un second contrôleur de peigne (54), qui est connecté pour contrôler le second modulateur de génération de peigne (53), et configuré pour appliquer audit second modulateur de génération de peigne un second signal de contrôle constitué de plusieurs secondes raies spectrales équidistantes, lesdites secondes raies spectrales étant séparées par un second incrément entre deux quelconques desdites secondes raies qui sont voisines spectralement,
une différence entre les premier et second incréments étant supérieure à une largeur spectrale qui est utilisée pour obtenir l'effet de compression d'impulsion,
et le module de traitement numérique (27) est configuré pour additionner ou moyenner des contributions de signaux de détection qui sont relatives à des couples différents de raies optiques, chaque couple de raies optiques étant formé par une première raie optique produite par le premier modulateur de génération de peigne (51) et une seconde raie optique produite par le second modulateur de génération de peigne (53).

9. Système LIDAR (100) selon la revendication 6, dans lequel la voie d'émission (10) comprend en outre :
- un premier modulateur de génération de peigne (51), qui est agencé pour être effectif sur les composantes de chaque impulsion (I) qui sont délivrées par les deux chemins de transfert (13a, 13b) ; et
- un premier contrôleur de peigne (52), qui est connecté pour contrôler le premier modulateur de génération de peigne (51), et configuré pour appliquer audit premier modulateur de génération de peigne un premier signal de contrôle constitué de plusieurs premières raies spectrales équidistantes, lesdites premières raies spectrales étant séparées par un premier incrément entre deux quelconques desdites premières raies qui sont voisines spectralement,
la voie de détection (20) comprend en outre :
- un second modulateur de génération de peigne (53), qui est agencé pour être effectif sur lesdites autres parties du rayonnement de la source laser (11) d'une part en même temps que sont détectés les rayonnements qui correspondent un-à-un aux impulsions (I) émises par la voie d'émission (10) après que lesdites impulsions ont été rétroréfléchies ou rétrodiffusées par la cible (T), et d'autre part en même temps que sont détectés les rayonnements qui sont représentatifs des impulsions telles qu'émises par la voie d'émission ; et
- un second contrôleur de peigne (54), qui est connecté pour contrôler le second modulateur de génération de peigne (53), et configuré pour appliquer audit second modulateur de génération de peigne un second signal de contrôle constitué de plusieurs secondes raies spectrales équidistantes, lesdites secondes raies spectrales étant séparées par un second incrément entre deux quelconques desdites secondes raies qui sont voisines spectralement,
une différence entre les premier et second incréments étant supérieure à une largeur spectrale qui est utilisée pour obtenir l'effet de compression d'impulsion,
et le module de traitement numérique (27) est configuré pour calculer la fonction de corrélation entre des signaux temporels de produit respectifs de la voie de mesure (23a) et
de la voie de référence (23b), le signal temporel de produit de la voie de mesure étant un mélange de deux composantes spectrales de peigne qui sont issues respectivement des deux chemins de transfert (13a, 13b) et ont été rétroréfléchies ou rétrodiffusées par la cible (T), et le signal temporel de produit de la voie de référence étant un mélange de deux composantes spectrales de peigne qui sont issues respectivement desdits deux chemins de transfert mais qui appartiennent aux rayonnements représentatifs des impulsions (I) telles qu'émises par la voie d'émission (10), chaque mélange étant effectué de façon à éliminer un effet de fluctuations de phase de la source laser (11).

10. Système LIDAR (100) selon l'une quelconque des revendications 1 à 5, dans lequel la voie d'émission (10) comprend en outre :
- un premier modulateur de génération de peigne (51), qui est disposé dans l'un des deux chemins de transfert (13a, 13b) de façon à être effectif sur la partie de rayonnement qui est transmise par ledit chemin de transfert ;
- un premier contrôleur de peigne (52), qui est connecté pour contrôler le premier modulateur de génération de peigne, et configuré pour appliquer audit premier modulateur de génération de peigne un premier signal de contrôle constitué de plusieurs premières raies spectrales équidistantes, lesdites premières raies spectrales étant séparées par un premier incrément entre deux quelconques desdites premières raies qui sont voisines spectralement ;
- un second modulateur de génération de peigne (53), qui est disposé dans l'autre des deux chemins de transfert (13a, 13b) de façon à être effectif sur la partie de rayonnement qui est transmise par ledit autre chemin de transfert ; et
- un second contrôleur de peigne (54), qui est connecté pour contrôler le second modulateur de génération de peigne, et configuré pour appliquer audit second modulateur de génération de peigne un second signal de contrôle constitué de plusieurs secondes raies spectrales équidistantes, lesdites secondes raies spectrales étant séparées par un second incrément entre deux quelconques desdites secondes raies qui sont voisines spectralement,
une différence entre les premier et second incréments étant supérieure à une largeur spectrale qui est utilisée pour obtenir l'effet de compression d'impulsion,
et le module de traitement numérique (27) est configuré pour additionner ou moyenner des contributions de signaux de détection qui sont relatives à des couples différents de raies optiques, chaque couple de raies optiques étant formé par une première raie optique produite par le premier modulateur de génération de peigne (51) et une seconde raie optique produite par le second modulateur de génération de peigne (53).

11. Système LIDAR (100) selon la revendication 8 à 10, dans lequel le premier et le second modulateur de génération de peignes (51, 53) sont de type modulateurs électro-optiques.

12. Système LIDAR (100) selon l'une quelconque des revendications précédentes, dans lequel un produit d'une largeur spectrale de chaque composante d'impulsion qui est modulée pour produire l'effet de compression d'impulsion, par la durée de ladite impulsion, est supérieur à 500, de préférence supérieur à 5000.

## Patentansprüche

1. LIDAR-System (100), umfassend einen Emissionspfad (10) und einen Detektionspfad (20), wobei der Emissionspfad (10) eine Laserquelle (11) umfasst und zum Emittieren von Strahlungsimpulsen (I) in Richtung eines Ziels (T) angepasst ist, das sich außerhalb des LIDAR-Systems befindet,
wobei das LIDAR-System (100) **dadurch gekennzeichnet ist, dass** der Emissionspfad (10) zwei Übertragungswege (13a, 13b) umfasst, die parallel angeordnet sind und zum gleichzeitigen Empfangen an jeweiligen Eingängen der Übertragungswege von jeweiligen Teilen einer Strahlung von der Laserquelle (11) eingerichtet sind und zum Überlagern an einem Ausgang von Komponenten jedes Impulses (I) eingerichtet sind, die durch die zwei Übertragungswege geliefert werden,
mindestens einer der zwei Übertragungswege (13a, 13b) umfassend:
- einen Modulator, genannt Impulskompressionsmodulator (14b); und
- einen Impulskompressionsregler (15b), der zum Regeln des Impulskompressionsmodulators (14b) verbunden ist, um die Impulskomponente zu modulieren, die durch den Übertragungsweg geliefert wird,
sodass während eines Betriebs des LIDAR-Systems (100) mindestens zwei Komponenten jedes Impulses (I)
aus der Strahlung gleichzeitig produziert werden, die von der Laserquelle (11) kommt,
innerhalb des Impulses (I) während einer Dauer des Impulses überlagert sind, jeweilige Spektren aufweisen, die unterschiedlich sind, und
mindestens eine der zwei Komponenten des Impulses (I) phasen- oder frequenzmoduliert wird,
und **dass** der Detektionspfad (20) mindestens einen Photodetektor (24a, 24b) umfasst und zum Erfüllen von Funktionen eingerichtet ist von:
- einem Messpfad (23a), der vorgesehen ist, um Strahlungen zu detektieren, die eins zu eins den Impulsen (I) entsprechen, die durch den Emissionspfad (10) emittiert werden, nachdem die Impulse durch das Ziel (T) zurückreflektiert oder zurückgestreut wurden, indem Messdetektionssignale geliefert werden; und
- einem Referenzpfad (23b), der vorgesehen ist, um Strahlungen zu detektieren, die die Impulse (I) darstellen, wie sie durch den Emissionspfad (10) emittiert werden, indem Referenzdetektionssignale geliefert werden; und
der Detektionspfad (20) ferner umfassend ein Digitalverarbeitungsmodul (27), das zum Empfangen der Messdetektionssignale und der Referenzdetektionssignale eingerichtet ist und das zum Berechnen einer Korrelationsfunktion zwischen den Messdetektionssignalen und den Referenzdetektionssignalen konfiguriert ist,
sodass die mindestens eine Komponente jedes Impulses (I), die moduliert wird, in Kombination mit der berechneten Korrelationsfunktion einen Impulskompressionseffekt erzielt.

2. LIDAR-System (100) nach Anspruch 1, wobei jeder Impulskompressionsregler (14b) zum Regeln, während des Betriebs des LIDAR-Systems und für die Impulskomponente, die durch den Übertragungsweg (13b) geliefert wird, zu dem der Impulskompressionsregler gehört, eine fortschreitende Variation einer optischen Frequenz während der Dauer des Impulses (I) angepasst ist.

3. LIDAR-System (100) nach Anspruch 2, wobei jeder Impulskompressionsregler (14b) ferner angepasst ist, damit die fortschreitende Variation der optischen Frequenz eine Variationsrate aufweist, die während der Dauer des Impulses (I) im Wesentlichen konstant ist.

4. LIDAR-System (100) nach einem der Ansprüche 1 bis 3, wobei der Detektionspfad (20) umfasst:
- einen ersten Detektionspfad, der vorgesehen ist, um den Messpfad (23a) zu bilden, umfassend einen ersten Photodetektor (24a), der zum Empfangen der Strahlungen eingerichtet ist, die eins zu eins den Impulsen (I) entsprechen, die durch den Emissionspfad (10) emittiert werden, nachdem die Impulse von dem Ziel (T) zurückreflektiert oder zurückgestreut wurden, und der die Messdetektionssignale liefert; und
- einen zweiten Detektionspfad, der sich von dem ersten Detektionspfad unterscheidet und vorgesehen ist, um den Referenzpfad (23b) zu bilden, umfassend einen zweiten Photodetektor (24b), der zum Empfangen der Strahlungen eingerichtet ist, die die Impulse (I) darstellen, wie sie durch den Emissionspfad (10) emittiert werden, und der die Referenzdetektionssignale liefert,
wobei das Digitalverarbeitungsmodul (27) mit den jeweiligen Ausgängen des ersten und des zweiten Erkennungspfads zum Empfangen der Messerkennungssignale und der Referenzerkennungssignale verbunden ist.

5. LIDAR-System (100) nach einem der Ansprüche 1 bis 3, wobei der Detektionspfad (20) umfasst:
- einen Photodetektor, der den zwei Funktionen des Messkanals (23a) und des Referenzpfads (23b) gemeinsam ist, der dazu bestimmt ist, während getrennter Zeitfenster einerseits die Strahlungen, die eins zu eins den Impulsen (I) entsprechen, die durch den Emissionspfad (10) emittiert werden, nachdem diese Impulse durch das Ziel (T) zurückreflektiert oder zurückgestreut wurden, und andererseits die Strahlungen zu empfangen, die die Impulse darstellen, die durch den Emissionspfad emittiert werden, indem er während jedes Zeitfensters Detektionssignale liefert; und
- einen Regler, der die Detektionssignale, die durch den gemeinsamen Photodetektor geliefert werden, in Abhängigkeit von den Zeitfenstern entweder als Messdetektionssignale oder als Referenzdetektionssignale zuordnet.

6. LIDAR-System (100) nach einem der vorstehenden Ansprüche, wobei der Detektionspfad (20) zum Empfangen ferner anderer Teile der Strahlung von der Laserquelle (11) optisch gekoppelt ist, einerseits zugleich mit den Strahlungen, die eins zu eins den Impulsen (I) entsprechen, die durch den Emissionspfad (10) emittiert werden, nachdem die Impulse durch das Ziel (T) zurückreflektiert oder zurückgestreut wurden, und andererseits zugleich mit den Strahlungen, die die Impulse darstellen, wie sie durch den Emissionspfad emittiert werden.

7. LIDAR-System (100) nach Anspruch 6, wobei das Digitalverarbeitungsmodul (27) zum Mischen einerseits von Komponenten der Messdetektionssignale, die jeweils von den zwei Übertragungswegen (13a, 13b) stammen, um ein Produktzeitsignal für den Messpfad (23a) zu erhalten, das frei von Phasenschwankungen der Laserquelle (11) ist, und andererseits zum Mischen von Komponenten der Referenzdetektionssignale, die jeweils von den zwei Übertragungswegen stammen, um separat ein Produktzeitsignal für den Referenzpfad (23b) zu erhalten, das ebenfalls frei von Phasenschwankungen der Laserquelle ist, angepasst ist, und wobei das Digitalverarbeitungsmodul zum Berechnen der Korrelationsfunktion zwischen den jeweiligen Produktzeitsignalen des Messpfads und des Referenzpfads angepasst ist.

8. LIDAR-System (100) nach Anspruch 6, wobei der Übertragungsweg (10) ferner umfasst:
- einen ersten Kammerzeugungsmodulator (51), der zum Einwirken auf die Komponenten jedes Impulses (I) eingerichtet ist, die durch die zwei Übertragungswege (13a, 13b) geliefert werden, und
- einen ersten Kammregler (52), der zum Regeln des ersten Kammerzeugungsmodulators (51) verbunden ist und zum Anlegen an den ersten Kammerzeugungsmodulator eines ersten Regelsignals konfiguriert ist, das aus mehreren äquidistanten ersten Spektrallinien gebildet ist, wobei die ersten Spektrallinien durch ein erstes Inkrement zwischen zwei beliebigen der ersten Linien getrennt sind, die spektral benachbart sind,
wobei der Detektionspfad (20) ferner umfasst:
- einen zweiten Kammerzeugungsmodulator (53), der zum Einwirken auf die anderen Teile der Strahlung der Laserquelle (11) einerseits zu der gleichen Zeit, zu der die Strahlungen detektiert werden, die eins zu eins den Impulsen (I) entsprechen, die durch den Emissionspfad (10) emittiert werden, nachdem die Impulse durch das Ziel (T) zurückreflektiert oder zurückgestreut wurden, und andererseits zu der gleichen Zeit, zu der die Strahlungen detektiert werden, die die Impulse darstellen, die durch den Emissionspfad emittiert werden, eingerichtet ist; und
- einen zweiten Kammregler (54), der zum Regeln des zweiten Kammerzeugungsmodulators (53) verbunden ist und zum Anlegen an den zweiten Kammerzeugungsmodulator eines zweiten Regelsignals konfiguriert ist, das aus mehreren äquidistanten zweiten Spektrallinien gebildet ist, wobei die zweiten Spektrallinien durch ein zweites Inkrement zwischen zwei beliebigen der zweiten Linien getrennt sind, die spektral benachbart sind,
wobei eine Differenz zwischen dem ersten und dem zweiten Inkrement größer als eine spektrale Breite ist, die zum Erhalten des Imulskompressionseffekts verwendet wird,
und das Digitalverarbeitungsmodul (27) zum Addieren oder Mitteln von Beiträgen von Detektionssignalen konfiguriert ist, die sich auf unterschiedliche Paare optischer Linien beziehen, wobei jedes Paar optischer Leitungen aus einer ersten optischen Linie, die durch den ersten Kammerzeugungsmodulator (51) produziert wird, und einer zweiten optischen Leitung ausgebildet ist, die durch den zweiten Kammerzeugungsmodulator (53) produziert wird.

9. LIDAR-System (100) nach Anspruch 6, wobei der Emissionspfad (10) ferner umfasst:
- einen ersten Kammerzeugungsmodulator (51), der zum Einwirken auf die Komponenten jedes Impulses (I) eingerichtet ist, die durch die zwei Übertragungswege (13a, 13b) geliefert werden; und
- einen ersten Kammregler (52), der zum Regeln des ersten Kammerzeugungsmodulators (51) verbunden ist und zum Anlegen an den ersten Kammerzeugungsmodulator eines ersten Regelsignals konfiguriert ist, das aus mehreren äquidistanten ersten Spektrallinien gebildet ist, wobei die ersten Spektrallinien durch ein erstes Inkrement zwischen zwei beliebigen der ersten Linien getrennt sind, die spektral benachbart sind,
wobei der Detektionspfad (20) ferner umfasst:
- einen zweiten Kammerzeugungsmodulator (53), der zum Einwirken auf die anderen Teile der Strahlung der Laserquelle (11) einerseits zu der gleichen Zeit, zu der die Strahlungen detektiert werden, die eins zu eins den Impulsen (I) entsprechen, die durch den Emissionspfad (10) emittiert werden, nachdem die Impulse durch das Ziel (T) zurückreflektiert oder zurückgestreut wurden, und andererseits zu der gleichen Zeit, zu der die Strahlungen detektiert werden, die die Impulse darstellen, die durch den Emissionspfad emittiert werden, eingerichtet ist, und
- einen zweiten Kammregler (54), der zum Regeln des zweiten Kammerzeugungsmodulators (53) verbunden ist und zum Anlegen an den zweiten Kammerzeugungsmodulator eines zweiten Regelsignals konfiguriert ist, das aus mehreren äquidistanten zweiten Spektrallinien gebildet ist, wobei die zweiten Spektrallinien durch ein zweites Inkrement zwischen zwei beliebigen der zweiten Linien getrennt sind, die spektral benachbart sind,
wobei eine Differenz zwischen dem ersten und dem zweiten Inkrement größer als eine spektrale Breite ist, die zum Erhalten des Imulskompressionseffekts verwendet wird,
und das Digitalverarbeitungsmodul (27) zum Berechnen der Korrelationsfunktion zwischen jeweiligen Produktzeitsignalen des Messpfads (23a) und des Referenzpfads (23b) konfiguriert ist, wobei das Produktzeitsignal des Messpfads eine Mischung aus zwei Kammspektralkomponenten ist, die jeweils von den zwei Übertragungswegen (13a, 13b) stammen und durch das Ziel (T) zurückreflektiert oder zurückgestreut wurden, und das Produktzeitsignal des Referenzpfads eine Mischung aus zwei Kammspektralkomponenten ist, die jeweils von den zwei Übertragungswegen stammen, aber die zu den Strahlungen gehören, die die Impulse (I) darstellen, wie sie durch den Emissionspfad (10) emittiert werden, wobei jede Mischung so durchgeführt wird, dass ein Effekt von Phasenschwankungen der Laserquelle (11) eliminiert wird.

10. LIDAR-System (100) nach einem der Ansprüche 1 bis 5, wobei der Detektionspfad (10) umfasst:
- einen ersten Kammerzeugungsmodulator (51), der in einem der zwei Übertragungswege (13a, 13b) angeordnet ist, um auf den Strahlungsteil einzuwirken, der durch den Übertragungsweg übertragen wird;
- einen ersten Kammregler (52), der zum Regeln des ersten Kammerzeugungsmodulators verbunden ist und zum Anlegen an den ersten Kammerzeugungsmodulator eines ersten Regelsignals konfiguriert ist, das aus mehreren äquidistanten ersten Spektrallinien gebildet ist, wobei die ersten Spektrallinien durch ein erstes Inkrement zwischen zwei beliebigen der ersten Linien getrennt sind, die spektral benachbart sind;
- einen zweiten Kammerzeugungsmodulator (53), der in dem anderen der zwei Übertragungswege (13a, 13b) angeordnet ist, um auf den Strahlungsteil einzuwirken, der durch den anderen Übertragungsweg übertragen wird; und
- einen zweiten Kammregler (54), der zum Regeln des zweiten Kammerzeugungsmodulators verbunden ist und zum Anlegen an den zweiten Kammerzeugungsmodulator eines zweiten Regelsignals konfiguriert ist, das aus mehreren äquidistanten zweiten Spektrallinien gebildet ist, wobei die zweiten Spektrallinien durch ein zweites Inkrement zwischen zwei beliebigen der zweiten Linien getrennt sind, die spektral benachbart sind,
wobei eine Differenz zwischen dem ersten und dem zweiten Inkrement größer als eine spektrale Breite ist, die zum Erhalten des Imulskompressionseffekts verwendet wird,
und das Digitalverarbeitungsmodul (27) zum Addieren oder Mitteln von Beiträgen von Detektionssignalen konfiguriert ist, die sich auf unterschiedliche Paare optischer Linien beziehen, wobei jedes Paar optischer Leitungen aus einer ersten optischen Linie, die durch den ersten Kammerzeugungsmodulator (51) produziert wird, und einer zweiten optischen Leitung ausgebildet ist, die durch den zweiten Kammerzeugungsmodulator (53) produziert wird.

11. LIDAR-System (100) nach Anspruch 8 bis 10, wobei der erste und zweite Kammerzeugungsmodulator (51, 53) von einer Art von elektrooptischen Modulatoren sind.

12. LIDAR-System (100) nach einem der vorstehenden Ansprüche, wobei ein Produkt aus einer spektralen Breite jeder Impulskomponente, die zum Produzieren des Impulskompressionseffekts moduliert wird, durch die Dauer des Impulses größer als 500, vorzugsweise größer als 5000 ist.

## Claims

1. LIDAR system (100) comprising an emission channel (10) and a detection channel (20), the emission channel (10) comprising a laser source (11) and being suitable for emitting pulses (I) of radiation towards a target (T) which is external to the LIDAR system,
the LIDAR system (100) being **characterized in that** the emission channel (10) comprises two transfer paths (13a, 13b) which are placed in parallel and arranged to simultaneously receive, at respective inputs of said transfer paths, respective portions of a radiation from the laser source (11), and arranged at the output to superpose components of each pulse (I) delivered by said two transfer paths,
at least one of the two transfer paths (13a, 13b) comprising:
- a modulator, referred to as a pulse-compression modulator (14b); and
- a pulse-compression controller (15b), connected to control the pulse-compression modulator (14b) so as to modulate the pulse component which is delivered by said transfer path,
so that during operation of the LIDAR system (100), at least two components of each pulse (I)
are produced simultaneously from the radiation coming from the laser source (11),
are superposed within the pulse (I) for a duration of said pulse, have respective spectra which are different, and
at least one of the two components of the pulse (I) is modulated in phase or frequency,
and **in that** the detection channel (20) comprises at least one photodetector (24a, 24b) and is arranged to perform the functions of:
- measurement channel (23a), dedicated to detecting radiations which correspond one-to-one to the pulses (I) emitted by the emission channel (10) after said pulses have been retroreflected or backscattered by the target (T), by delivering measurement detection signals; and
- reference channel (23b), dedicated to detecting radiations which are representative of the pulses (I) as emitted by the emission channel (10), by delivering reference detection signals; and
the detection channel (20) further comprising a digital processing module (27) which is arranged to receive the measurement detection signals and the reference detection signals, and which is configured to calculate a correlation function between said measurement detection signals and reference detection signals,
so that the at least one component of each pulse (I) that is modulated, combined with the calculated correlation function, produces a pulse-compression effect.

2. LIDAR system (100) according to claim 1, wherein each pulse-compression controller (14b) is suitable for controlling, during operation of the LIDAR system and for the pulse component which is delivered by the transfer path (13b) to which said pulse-compression controller belongs, a gradual variation in optical frequency for the duration of the pulse (I).

3. LIDAR system (100) according to claim 2, wherein each pulse-compression controller (14b) is further suitable for the gradual optical frequency variation to have a rate of variation which is substantially constant for the duration of the pulse (I).

4. LIDAR system (100) according to any one of claims 1 to 3, wherein the detection channel (20) comprises:
- a first detection path dedicated to forming the measurement path (23a), comprising a first photodetector (24a) which is arranged to receive the radiations which correspond one-to-one to the pulses (I) emitted by the emission channel (10) after said pulses have been retroreflected or backscattered by the target (T), and delivering the measurement detection signals; and
- a second detection path, separate from the first detection path and dedicated to forming the reference channel (23b), comprising a second photodetector (24b) which is arranged to receive the radiations which are representative of the pulses (I) as emitted by the emission channel (10), and delivering the reference detection signals,
the digital processing module (27) being connected to respective outputs of the first detection path and second detection path to receive the measurement detection signals and the reference detection signals.

5. LIDAR system (100) according to any one of claims 1 to 3, wherein the detection channel (20) comprises:
- a photodetector shared by the two functions of measurement channel (23a) and reference channel (23b), which is intended to receive, during separate time windows, both the radiations which correspond one-to-one to the pulses (I) emitted by the emission channel (10) after said pulses have been retroreflected or backscattered by the target (T), and the radiations which are representative of the pulses as emitted by the emission channel, delivering detection signals during each time window; and
- a controller, which assigns the detection signals delivered by the shared photodetector as either measurement detection signals or reference detection signals, depending on the time windows.

6. LIDAR system (100) according to any one of the preceding claims, wherein the detection channel (20) is optically coupled to additionally receive other portions of the radiation from the laser source (11), both at the same time as the radiations which correspond one-to-one to the pulses (I) emitted by the emission channel (10) after said pulses have been retroreflected or backscattered by the target (T), and at the same time as the radiations which are representative of the pulses as emitted by the emission channel.

7. LIDAR system (100) according to claim 6, wherein the digital processing module (27) is suitable for mixing components of the measurement detection signals which originate respectively from the two transfer paths (13a, 13b) so as to obtain a temporal product signal for the measurement channel (23a) which is free from phase fluctuations of the laser source (11), and for mixing components of the reference detection signals which originate respectively from said two transfer paths so as to obtain separately a temporal product signal for the reference channel (23b) which is also free from phase fluctuations of the laser source, and the digital processing module is suitable for calculating the correlation function between the respective product time signals of the measurement channel and the reference channel.

8. LIDAR system (100) according to claim 6, wherein the emission channel (10) further comprises:
- a first comb generation modulator (51), which is arranged to be effective on the components of each pulse (I) that are delivered by the two transfer paths (13a, 13b); and
- a first comb controller (52), which is connected to control the first comb generation modulator (51), and configured to apply to said first comb generation modulator a first control signal consisting of a plurality of equidistant first spectral lines, said first spectral lines being separated by a first increment between any two of said first lines that are spectrally adjacent,
the detection channel (20) further comprises:
- a second comb generation modulator (53), which is arranged to be effective on said other portions of the radiation of the laser source (11) both at the same time as the radiations are detected which correspond one-to-one to the pulses (I) emitted by the emission channel (10) after said pulses have been retroreflected or backscattered by the target (T), and at the same time as the radiations are detected which are representative of the pulses as emitted by the emission channel; and
- a second comb controller (54), which is connected to control the second comb generation modulator (53), and configured to apply to said second comb generation modulator a second control signal consisting of a plurality of equidistant second spectral lines, said second spectral lines being separated by a second increment between any two of said second lines which are spectrally adjacent,
a difference between the first increment and the second increment being greater than a spectral width which is used to obtain the pulse-compression effect,
and the digital processing module (27) is configured to add or average detection signal contributions relating to different pairs of optical lines, each pair of optical lines being formed by a first optical line produced by the first comb generation modulator (51) and a second optical line produced by the second comb generation modulator (53).

9. LIDAR system (100) according to claim 6, wherein the emission channel (10) further comprises:
- a first comb generation modulator (51), which is arranged to be effective on the components of each pulse (I) that are delivered by the two transfer paths (13a, 13b); and
- a first comb controller (52), which is connected to control the first comb generation modulator (51), and configured to apply to said first comb generation modulator a first control signal consisting of a plurality of equidistant first spectral lines, said first spectral lines being separated by a first increment between any two of said first lines that are spectrally adjacent,
the detection channel (20) further comprises:
- a second comb generation modulator (53), which is arranged to be effective on said other portions of the radiation of the laser source (11) both at the same time as the radiations are detected which correspond one-to-one to the pulses (I) emitted by the emission channel (10) after said pulses have been retroreflected or backscattered by the target (T), and at the same time as the radiations are detected which are representative of the pulses as emitted by the emission channel; and
- a second comb controller (54), which is connected to control the second comb generation modulator (53), and configured to apply to said second comb generation modulator a second control signal consisting of a plurality of equidistant second spectral lines, said second spectral lines being separated by a second increment between any two of said second lines which are spectrally adjacent,
a difference between the first increment and the second increment being greater than a spectral width which is used to obtain the pulse-compression effect,
and the digital processing module (27) is configured to calculate the correlation function between respective product time signals of the measurement channel (23a) and the reference channel (23b), the product time signal of the measurement channel being a mixture of two comb spectral components which originate respectively from the two transfer paths (13a, 13b) and have been retroreflected or backscattered by the target (T), and the temporal product signal of the reference channel being a mixture of two spectral comb components which come respectively from said two transfer paths but which belong to the radiations representative of the pulses (I) as emitted by the emission channel (10), each mixture being effected so as to eliminate an effect of phase fluctuations of the laser source (11).

10. LIDAR system (100) according to any one of claims 1 to 5, wherein the emission channel (10) further comprises:
- a first comb generation modulator (51), which is placed in one of the two transfer paths (13a, 13b) so as to be effective on the portion of radiation which is transmitted by said transfer path;
- a first comb controller (52), which is connected to control the first comb generation modulator, and configured to apply to said first comb generation modulator a first control signal consisting of a plurality of equidistant first spectral lines, said first spectral lines being separated by a first increment between any two of said first lines which are spectrally adjacent;
- a second comb generation modulator (53), which is placed in the other of the two transfer paths (13a, 13b) so as to be effective on the portion of radiation which is transmitted by said other transfer path; and
- a second comb controller (54), which is connected to control the second comb generation modulator, and configured to apply to said second comb generation modulator a second control signal consisting of a plurality of equidistant second spectral lines, said second spectral lines being separated by a second increment between any two of said second lines which are spectrally adjacent,
a difference between the first increment and the second increment being greater than a spectral width which is used to obtain the pulse-compression effect,
and the digital processing module (27) is configured to add or average detection signal contributions relating to different pairs of optical lines, each pair of optical lines being formed by a first optical line produced by the first comb generation modulator (51) and a second optical line produced by the second comb generation modulator (53).

11. LIDAR system (100) according to claims 8 to 10, wherein the first and the second comb generation modulator (51, 53) are electro-optical modulators.

12. LIDAR system (100) according to any one of the preceding claims, wherein a product of a spectral width of each pulse component which is modulated to produce the pulse-compression effect, for the duration of said pulse, is greater than 500, preferably greater than 5000.
